# EUROPEAN PATENT APPLICATION

(11) **EP 4 804 671 A1**
(43) Date of publication of application: **09.09.2026**
(21) Application number: 23957274.6
(22) Date of filing: 02.11.2023
(51) Int. Cl.: H04W 72/0446

(54) **WIRELESS COMMUNICATION METHOD, APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Novagraaf Technologies
(86) International application number: PCT/CN2023/129421
(87) International publication number: WO 2025/091404

(57) **Abstract**

A wireless communication method, an apparatus, a device and a storage medium, which relate to the technical field of communication. The method comprises: a first uplink transmission of a terminal device occupying a first time-domain resource, wherein a second time-domain resource is an overlap between the first time-domain resource and a time-domain resource for an inactive period of cell DRX, and the first time-domain resource comprises a first target time-domain resource and/or a second target time-domain resource; and the terminal device sending the first uplink transmission on the first target time-domain resource, and/or, not sending the first uplink transmission on the second target time-domain resource. When a terminal device is configured with cell DRX, if a time-domain resource occupied by an uplink transmission of the terminal device partially or completely overlaps a time-domain resource occupied by an inactive period of the cell DRX, a solution for how to process the uplink transmission is provided, helping to improve the reliability of the uplink transmission.

## Description

### TECHNICAL FIELD

Embodiments of the present disclosure relate to the field of communication technology, and in particular, to a method for wireless communication, and an apparatus, a device, and a storage medium thereof.

### RELATED ART

In the new radio (NR) system, to achieve network energy saving, a network device can configure cell discontinuous transmission (cell DTX) and/or cell discontinuous reception (cell DRX) configurations for a terminal device. During the non-active period of the cell DTX configured for the terminal device, the network device may not transmit a specific downlink channel or signal, and/or the terminal device may not receive a specific downlink channel or signal. During the non-active period of the cell DRX configured for the terminal device, the terminal device may not transmit a specific downlink channel or signal, and/or the network device may not receive a specific uplink channel or signal. In this way, energy saving of the network device can be achieved.

In the case where the terminal device is configured with the cell DRX, the time-domain resource occupied by the terminal device's uplink transmission (a preconfigured uplink transmission and/or a dynamically scheduled uplink transmission) may partially or fully overlap with the time-domain resource occupied by the non-active period of the cell DRX. In this case, how the terminal device processes this uplink transmission is a problem to be addressed.

### SUMMARY

The embodiments of the present disclosure provide a method for wireless communication, and an apparatus, a device, and a storage medium thereof. The technical solutions are as follows.

According to an aspect of the embodiments of the present disclosure, a method for wireless communication is provided, wherein the method is performed by a terminal device. The first uplink transmission of the terminal device occupies a first time-domain resource, and a second time-domain resource is an overlapping part between the first time-domain resource and a time-domain resource of a non-active period of a cell DRX. The first time-domain resource includes a first target time-domain resource and/or a second target time-domain resource. The method includes: transmitting the first uplink transmission on the first target time-domain resource; and/or, refraining from transmitting the first uplink transmission on the second target time-domain resource.

According to an aspect of the embodiments of the present disclosure, a method for wireless communication is provided, wherein the method is performed by a network device. A first uplink transmission of a terminal device occupies a first time-domain resource, and a second time-domain resource is an overlapping part between the first time-domain resource and a time-domain resource of a non-active period of a cell DRX configured by the network device. The first time-domain resource includes a first target time-domain resource and/or a second target time-domain resource. The method includes: receiving the first uplink transmission on the first target time-domain resource; and/or, not receiving the first uplink transmission on the second target time-domain resource.

According to an aspect of the embodiments of the present disclosure, a terminal device is provided. A first uplink transmission of the terminal device occupies a first time-domain resource, and a second time-domain resource is an overlapping part between the first time-domain resource and a time-domain resource of a non-active period of a cell DRX. The first time-domain resource includes a first target time-domain resource and/or a second target time-domain resource. The terminal device includes: a transmitting module, configured to transmit the first uplink transmission on the first target time-domain resource, and/or refrain from transmitting the first uplink transmission on the second target time-domain resource.

According to an aspect of the embodiments of the present disclosure, a network device is provided. A first uplink transmission of a terminal device occupies a first time-domain resource, and a second time-domain resource is an overlapping part between the first time-domain resource and a time-domain resource of a non-active period of a cell DRX configured by the network device. The first time-domain resource includes a first target time-domain resource and/or a second target time-domain resource. The network device includes: a receiving module, configured to receive the first uplink transmission on the first target time-domain resource, and/or refrain from receiving the first uplink transmission on the second target time-domain resource.

According to an aspect of the embodiments of the present disclosure, a communication device is provided, which includes a processor and a memory. The memory stores a computer program, which when executed by the processor, causes the processor to perform the method for wireless communication on the terminal device as described above, or to perform the method for wireless communication on the network device as described above.

According to an aspect of the embodiments of the present disclosure, a computer-readable storage medium is provided, in which a computer program is stored. The computer program, when executed by a processor, causes the processor to perform the method for wireless communication on the terminal device as described above, or to perform the method for wireless communication on the network device as described above.

According to an aspect of the embodiments of the present disclosure, a chip is provided, which includes a programmable logic circuit and/or program instructions. When the chip runs, the chip is used to perform the method for wireless communication on the terminal device as described above, or to perform the method for wireless communication on the network device as described above.

According to an aspect of the embodiments of the present disclosure, a computer program product is provided, which includes computer instructions stored in a computer-readable storage medium. The processor reads and executes the computer instructions from the computer-readable storage medium to perform the method for wireless communication on the terminal device as described above, or to perform the method for wireless communication on the network device as described above.

The technical solution according to the embodiments of the present disclosure may achieve the following beneficial effects:

In a case where a terminal device is configured with cell DRX, in the case where a time-domain resource occupied by an uplink transmission of the terminal device is partially or fully overlapped with a time-domain resource occupied by a non-active period of the cell DRX, the solution is provided to handle this uplink transmission. The terminal device can transmit the uplink transmission on a certain time-domain resource and/or refrain from transmitting the uplink transmission on a certain time-domain resource, thereby ensuring that the network device and the terminal device have a consistent understanding of an uplink channel or signal to be transmitted, and enhancing the reliability of the uplink transmission.

### BRIEF DESCRIPTION OF DRAWINGS

FIG. 1 is a schematic diagram of an architecture of a communication system according to some embodiments of the present disclosure;
FIG. 2 is a schematic diagram of an architecture of another communication system according to some embodiments of the present disclosure;
FIG. 3 is a schematic diagram of an architecture of another communication system according to some embodiments of the present disclosure;
FIG. 4 is a schematic diagram of activating or deactivating cell DRX of a second cell via DCI signaling according to some embodiments of the present disclosure;
FIG. 5 is a flowchart of a method for wireless communication according to some embodiments of the present disclosure;
FIG. 6 is a schematic diagram illustrating a positional relationship between a first time-domain resource and a second time-domain resource according to some embodiments of the present disclosure;
FIG. 7 is a schematic diagram illustrating the determination of whether to transmit a first uplink transmission based on a first processing time condition according to some embodiments of the present disclosure;
FIG. 8 is a schematic diagram illustrating the determination of whether to transmit a first uplink transmission based on a second processing time condition according to some embodiments of the present disclosure;
FIG. 9 is a schematic diagram illustrating the determination of whether to transmit CG-PUSCH based on a second processing time length according to some embodiments of the present disclosure;
FIG. 10 is a schematic diagram illustrating the determination of whether to transmit CG-PUSCH based on a second processing time length according to some other embodiments of the present disclosure;
FIG. 11 is a flowchart of a method for wireless communication according to some other embodiments of the present disclosure;
FIG. 12 is a block diagram of a terminal device according to some embodiments of the present disclosure;
FIG. 13 is a block diagram of a network device according to some embodiments of the present disclosure;
FIG. 14 is a structural schematic diagram of a terminal device according to some embodiments of the present disclosure; and
FIG. 15 is a structural diagram of a network device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

The technical solutions of the embodiments of the present disclosure are applicable to various communication systems, such as a global system of mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, a 6^{th} generation (6G) system, or another communication system.

Generally, a conventional communication system supports a limited quantity of connections and is easy to implement. However, with development of communication technologies, a mobile communication system supports not only conventional communications modes, but also other communications modes, such as a device-to-device (D2D) communication, a machine-to-machine (M2M) communication, a machine-type communication (MTC), a vehicle-to-vehicle (V2V) communication, or a vehicle-to-everything (V2X) communication. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum.

The embodiments of the present disclosure can be applied to a non-terrestrial network (NTN) systems and a terrestrial network (TN) system. The NTN generally adopts a satellite communication to provide communication services to ground users. Currently, the NTN system includes an NR-NTN system and an IoT-NTN system, and may subsequently include other NTN systems.

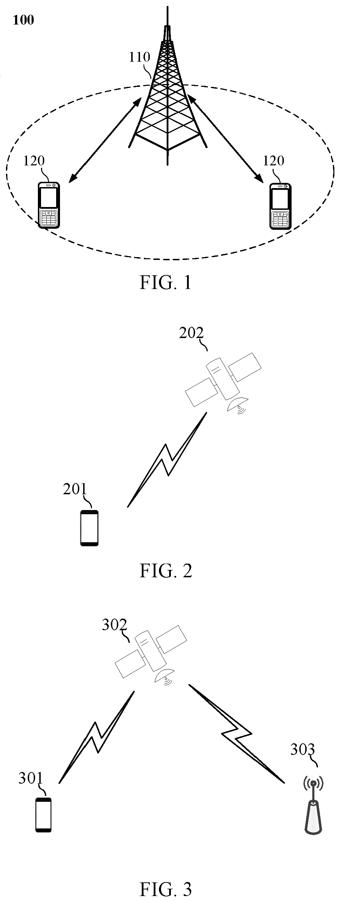

Illustratively, FIG. 1 is a schematic diagram of an architecture of a communication system according to some embodiments of the present disclosure. As illustrated in FIG. 1, the communication system 100 may include a network device 110, which may be a device communicating with a terminal device 120. The network device 110 may provide communication coverage for a specific geographic area and may communicate with terminal devices located within the coverage area.

FIG. 1 illustrates one network device 110 and two terminal devices 120. In some embodiments of the present disclosure, the communication system 100 may include a plurality of network devices, and the coverage area of each network device may include terminal devices of other numbers, which is not limited in the embodiments of the present disclosure.

Illustratively, FIG. 2 is a schematic diagram of an architecture of another communication system according to some embodiments of the present disclosure. Referring to FIG. 2, the communication system may include a terminal device 201 and a satellite 202, which can engage in wireless communication. The network formed between the terminal device 201 and the satellite 202 can also be referred to as the NTN. In the architecture of the communication system illustrated in FIG. 2, the satellite 202 can function as a base station, and direct communication can be established between the terminal device 201 and the satellite 202. Within this system architecture, the satellite 202 can be referred to as the network device. In some embodiments of the present disclosure, the communication system may include a plurality of satellites 202, and the coverage area of each network satellite 202 may include terminal devices of other numbers, which is not limited in the embodiments of the present disclosure.

Illustratively, FIG. 3 is a schematic diagram of an architecture of another communication system according to some embodiments of the present disclosure. Referring to FIG. 3, the communication system includes a terminal device 301, a satellite 302, and a base station 303. Wireless communication can be performed between the terminal device 301 and the satellite 302, and communication can be performed between the satellite 302 and the base station 303. The network formed among the terminal device 301, the satellite 302, and the base station 303 can also be referred to as the NTN. In the architecture of the communication system illustrated in FIG. 3, the satellite 302 may not have the function of a base station, and communication between the terminal device 301 and the base station 303 needs to be relayed by the satellite 302. Within this system architecture, the base station 303 can be referred to as the network device. In some embodiments of the present disclosure, the communication system may include a plurality of base stations 303, each of which can communicate with one or more satellites 302, and the coverage area of each satellite 302 may include terminal devices of other numbers, which is not limited in the embodiments of the present disclosure.

In future evolved communication systems such as Beyond 5G (B5G) or 6G, scenarios involving a distributed multiple-input multiple-output (MIMO) (also known as a distributed antenna system) and/or a massive MIMO (also known as a massive antenna matrix system) may also be included. In some cases, the distributed MIMO and/or the massive MIMO can also support cell-free networking scenarios or UE-centric networking scenarios. It should be understood that the aforementioned scenarios are also applicable to TN and/or NTN.

The terminal device mentioned in the embodiments of the present disclosure can refer to a user equipment (UE), an access terminal, a user unit, a user station, a mobile site, a mobile station, a remote station, a remote terminal, a mobile device, a wireless communication device, a user agent, or a user device. Optionally, the terminal device 10 can be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, an in-vehicle device, a wearable device, a terminal device in 5G, a terminal device in a future-evolved public land mobile network (PLMN), or the like, which is not limited in the embodiments of the present disclosure. For ease of description, the aforementioned devices are collectively referred to as terminal devices. In the embodiments of the present disclosure, "terminal device" and "UE" are often used interchangeably, but those skilled in the art will understand that they can convey the same meaning.

The network device mentioned in the embodiments of the present disclosure can be an access network device, which can be located on the ground or on a satellite. The access network device is a device deployed in an access network to provide wireless communication functions for terminal devices. The access network device can include various forms of a macro base station, a micro base station, a relay station, an access point, and so on. In systems adopting different radio access technologies, the names of devices with access network device functions may vary. For example, in a 5G NR system, the device with access network device functions may be called a gNodeB or a gNB. As communication technology evolves, the term "access network device" may change. For ease of description, in the embodiments of the present disclosure, the aforementioned devices that provide wireless communication functions for terminal devices are collectively referred to as the access network device. Optionally, a communication relationship can be established between the terminal device and the core network device via the access network device.

The "5G NR system" in the embodiments of the present disclosure can also be referred to as a 5G system or an NR system, but those skilled in the art can understand its meaning. The technical solutions described in the embodiments of the present disclosure can be applied to the LTE system, the 5G NR system, subsequent evolution systems of 5G NR systems (such as the B5G system and the 6G system), and other communication systems such as a narrow band Internet of Things (NB-IoT) system, which is not limited in the present disclosure.

In the embodiments of the present disclosure, the network device can provide services for a cell. The terminal device communicates with the network device via a transmission resource (such as a frequency-domain resource, or a spectrum resource) on a carrier used by the cell. The cell can be a cell corresponding to the network device (such as a base station). The cell can belong to a macro base station or a base station corresponding to a small cell. Here, the small cell can include: a metro cell, a micro cell, a pico cell, a femto cell, or the like. These small cells are characterized by small coverage areas and low transmission power, and are suitable for providing high-rate data transmission services.

Prior to the introduction of the technical solution of present disclosure, the related technologies are first introduced. The following related technologies can be arbitrarily combined with the technical solution of the embodiments of present disclosure as optional solutions, and all of them fall within the protection scope of the embodiments of present disclosure. The embodiments of present disclosure include at least some of the following contents.

### 1. Network energy saving

Network energy saving holds significant importance for environmental sustainability, reducing environmental impact (specifically, greenhouse gas emissions), and saving operational costs. As 5G gradually becomes prevalent across various industries and geographical regions, it necessitates the support of extremely high data transmission rates to handle more advanced services and applications (such as XR). Consequently, network deployments are becoming denser, utilizing more antennas, greater bandwidth, and additional frequency bands. Given the environmental impact of 5G, there is a need to develop controlled and innovative solutions to enhance network energy saving.

Energy consumption has become a crucial component of operators' operational expenditure (OPEX). According to a report of the Global System for Mobile Communications Association (GSMA), the energy cost of mobile networks accounts for approximately 23% of the total operational cost. The majority of energy consumption originates from the wireless access network, specifically from the active antenna unit (AAU), with data centers and fiber optic transmission accounting for a smaller share. The power consumption of one wireless access can be divided into two parts: a dynamic part, which includes only the power consumption when data is being transmitted or received; and a static part, which includes the power consumption necessary to maintain the operation of wireless access equipment at all times, including when no data is being transmitted or received.

Therefore, based on the aforementioned objectives, it is necessary to research and develop network energy consumption models, key performance indicators (KPIs), evaluation methods, or the like for the network device to determine and study network energy-saving technologies in target deployment scenarios. The power consumption model already defined for the terminal device can serve as a reference. The research should focus on how to achieve more effective dynamic and/or semi-static operations, as well as consider one or more network energy-saving technologies applied in the time, frequency, spatial, and power domains, combined with potential terminal device feedback support, potential terminal device auxiliary information, and information exchange or coordination between network interfaces, to achieve finer-grained data transmission and/or reception adaptation.

It is worth noting that this study not only evaluates potential network energy-saving gains, but also assesses and balances the impact on network and user performance by observing key performance indicators (KPIs) such as spectrum efficiency, capability, user perceived throughput (UPT), latency, UE power consumption, complexity, handover performance, call drop rate, initial access performance, KPIs related to SLA security, and so on. This study should avoid having a significant impact on the aforementioned KPIs.

### 2. Cell DTX and/or cell DRX configuration in the NR system

In the NR system, to achieve network energy saving, network devices can configure cell DTX and/or cell DRX configurations for the terminal devices. During the non-active period of the cell DTX configured for the terminal device, the network device may refrain from transmitting specific downlink channels or signals, and/or the terminal device may refrain from receiving specific downlink channels or signals. During the non-active period of cell DRX configured for the terminal device, the terminal device may refrain from transmitting specific downlink channels or signals, and/or the network device may refrain from receiving specific uplink channels or signals. In this way, energy consumption of network devices can be saved.

Currently, network devices can configure the cell DTX and the cell DRX independently, or configure the cell DTX and the cell DRX simultaneously. The configuration of the cell DTX and/or the cell DRX can be validated via radio resource control (RRC) signaling, or activated or deactivated via downlink control information (DCI) signaling.

In the case where the configuration of the cell DTX and/or the cell DRX is activated or deactivated via DCI signaling, if the terminal device receives DCI format 2_9 indicating a change in the activation or deactivation state of the cell DTX and/or the cell DRX of the second cell at slot m on a downlink active bandwidth part (BWP) of the first cell, the terminal device activates or deactivates, starting from the first slot on the downlink active BWP and/or an uplink active BWP of the second cell, the cell DTX and/or the cell DRX based on this indication information. The first slot is not earlier than the start position of slot m+d on the downlink active BWP of the first cell, wherein d is the number of slots determined based on the subcarrier spacing of the downlink active BWP of the first cell, and the value of d is illustrated in Table 1 below.

**Table 1: Values of d**

| SCS (kHz) | Number of slots (d) |
|---|---|
| 15 | 3 |
| 30 | 6 |
| 60 | 12 |
| 120 | 24 |
| 480 | 96 |
| 960 | 192 |

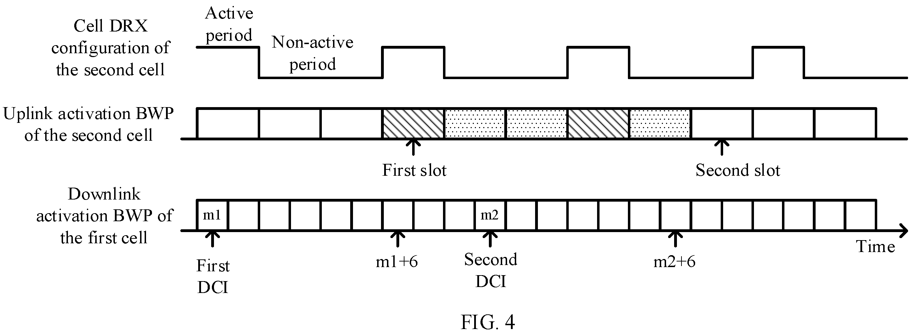

As an example, the second cell of the terminal device is configured with the cell DRX and is in an inactive state. In the case where the terminal device receives first DCI corresponding to the DCI format 2_9 on slot m1 of the downlink active BWP of the first cell, and the first DCI indicates that the cell DRX of the second cell is to be activated, the terminal device activates the cell DRX from a first slot on the uplink active BWP of the second cell based on this indication information. Here, the first slot is not earlier than the start position of slot m1+d on the downlink active BWP of the first cell. In the case where the terminal device receives second DCI corresponding to the DCI format 2_9 on slot m2 of the downlink active BWP of the first cell, and the second DCI indicates that the cell DRX in the second cell is to be deactivated, the terminal device deactivates the cell DRX from a second slot on the uplink active BWP of the second cell based on this indication information. Here, the second slot is not earlier than the start position of slot m2+d on the downlink active BWP of the first cell. FIG. 4 illustrates a schematic diagram of activating or deactivating the cell DRX of the second cell via DCI signaling. In FIG. 4, it is assumed that the subcarrier spacing (SCS) of the downlink active BWP of the first cell is 30 kHz, i.e., the value of d is 6; the SCS of the uplink active BWP of the second cell is 15 kHz. It should be noted that the first cell and the second cell can be the same cell or different cells.

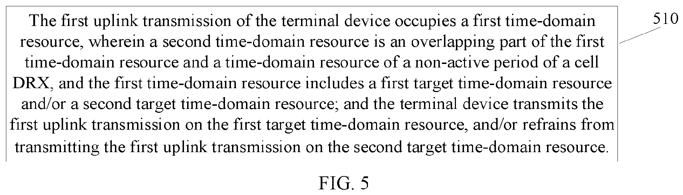

Please refer to FIG. 5, which illustrates a flowchart of a method for wireless communication according to an embodiment of the present disclosure. This method can be performed by a terminal device. The method may include the following processes.

In process 510, a first uplink transmission of the terminal device occupies a first time-domain resource, and a second time-domain resource is an overlapping part between the first time-domain resource and a time-domain resource of a non-active period of a cell DRX, and the first time-domain resource includes a first target time-domain resource and/or a second target time-domain resource, the terminal device transmits the first uplink transmission on the first target time-domain resource, and/or refrain from transmitting the first uplink transmission on the second target time-domain resource.

In some embodiments, the first uplink transmission includes a preconfigured uplink channel or signal. In some embodiments, the preconfigured uplink channel or signal includes one or more of: a configured grant physical uplink shared channel (CG-PUSCH), a RRC-configured sounding reference signal (SRS), a SRS activated by medium access control control (MAC) element (CE), a scheduling request (SR), a physical uplink control channel (PUCCH) not carrying hybrid automatic repeat request-acknowledgement (HARQ-ACK) information, and a physical uplink shared channel (PUSCH) carrying semi-persistent channel state information (SP-CSI).

In some embodiments, the first uplink transmission includes one or more preconfigured uplink channels or signals.

In some embodiments, in the case where the first uplink transmission includes the plurality of preconfigured uplink channels or signals, the plurality of preconfigured uplink channels or signals may be transmitted repeatedly or not transmitted repeatedly.

For example, in the case where the preconfigured uplink channel or signal includes the CG-PUSCH, the first uplink transmission includes one CG-PUSCH; or, the first uplink transmission includes a plurality of CG-PUSCHs carrying the same transport block (TB); or, the first uplink transmission includes a plurality of CG-PUSCHs carrying different TBs.

For example, in the case where the preconfigured uplink channel or signal includes the SRS, the first uplink transmission includes one or more SRS.

For example, in the case where the preconfigured uplink channel or signal includes the PUCCH, the first uplink transmission includes one PUCCH; or, the first uplink transmission includes a plurality of PUCCHs transmitted repeatedly.

In some embodiments, the first uplink transmission includes a dynamically scheduled uplink channel or signal. In some embodiments, the dynamically scheduled uplink channel or signal includes one or more of: a DCI-scheduled PUSCH, a DCI-triggered SRS, and a PUCCH carrying HARQ-ACK information.

In some embodiments, in the case where the first uplink transmission includes the plurality of dynamically scheduled uplink channels or signals, the plurality of dynamically scheduled uplink channels or signals may be transmitted repeatedly or not transmitted repeatedly.

In some embodiments, the active periods and non-active periods of the cell DRX are arranged alternately. During the non-active period of the cell DRX configured for the terminal device, the terminal device may refrain from transmitting a specific uplink channel or signal, and/or the network device may refrain from receiving a specific uplink channel or signal.

Generally, during the non-active period of the cell DRX, the terminal device refrains from transmitting the preconfigured uplink channel or signal, and the network device refrains from receiving the preconfigured uplink channel or signal. Since the dynamically scheduled uplink channel or signal is dynamically determined by the network device based on service transmission requirements, if the network device does not expect the terminal device to transmit during the non-active period of the cell DRX, the network device may not schedule. Therefore, if the network device dynamically schedules the terminal device to transmit an uplink channel or signal during the non-active period of the cell DRX, the terminal device needs to transmit the dynamically scheduled uplink channel or signal, and correspondingly, the network device can receive the dynamically scheduled uplink channel or signal. Additionally, during the non-active period of the cell DRX, if the terminal device needs to perform HARQ-ACK information feedback for a received downlink channel or signal, the terminal device needs to transmit the HARQ-ACK information.

In the embodiments of the present disclosure, the first uplink transmission of the terminal device occupies the first time-domain resource, and the second time-domain resource within the first time-domain resource is the overlapping part between the first time-domain resource and the time-domain resource of the non-active period of the cell DRX. In the case where the size of the second time-domain resource is not zero (that is, in the case where a second time-domain resource is present), it indicates that the time-domain resource occupied by the first uplink transmission of the terminal device is overlapped with some or all of the time-domain resource of the non-active period of the cell DRX. In the case where the size of the second time-domain resource is zero (that is, in the case where no second time-domain resource is present), it indicates that the first time-domain resource occupied by the first uplink transmission of the terminal device does not belong to the non-active period of the cell DRX.

The positional relationship between the first time-domain resource and the second time-domain resource falls into one of the following cases.

Case 1: The start position of the first time-domain resource is within the active period of the cell DRX, and the end position of the first time-domain resource is the same as that of the second time-domain resource.

Case 2: The start position of the first time-domain resource is within the active period of the cell DRX, and the end position of the first time-domain resource is also within the active period of the cell DRX.

Case 3: The start position of the first time-domain resource is the same as that of the second time-domain resource, and the end position of the first time-domain resource is the same as that of the second time-domain resource.

Case 4: The start position of the first time-domain resource is the same as that of the second time-domain resource, and the end position of the first time-domain resource is within the active period of the cell DRX.

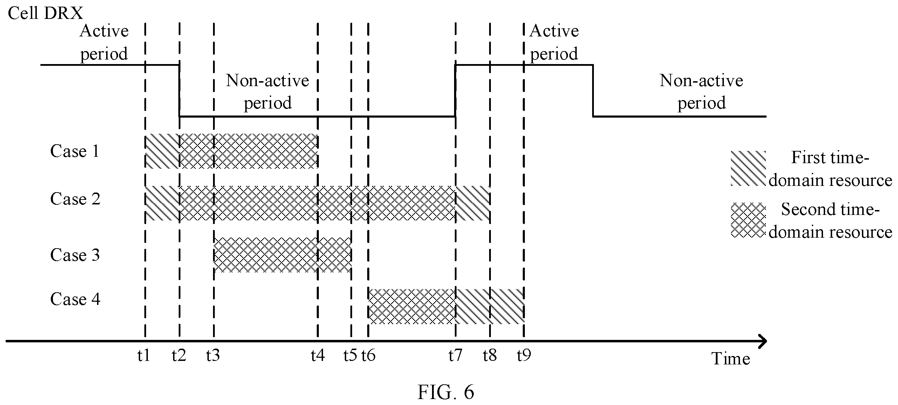

As illustrated in FIG. 6, FIG. 6 illustrates a schematic diagram of the positional relationship between the first time-domain resource and the second time-domain resource.

With respect to case 1, the start position of the first time-domain resource is t1, and the end position of the first time-domain resource is t4. The start position of the second time-domain resource is t2, and the end position of the second time-domain resource is also t4. It can be seen that the start position of the first time-domain resource is within the active period of the cell DRX, and the end position of the first time-domain resource is the same as that of the second time-domain resource.

With respect to case 2, the start position of the first time-domain resource is t1, and the end position of the first time-domain resource is t8. The start position of the second time-domain resource is t2, and the end position of the second time-domain resource is t7. It can be seen that the start position of the first time-domain resource is within the active period of the cell DRX, while the end position of the first time-domain resource is within another active period of the cell DRX.

With respect to case 3, the start position of the first time-domain resource is t3, and the end position of the first time-domain resource is t5. The start position of the second time-domain resource is t3, and the end position of the second time-domain resource is t5. It can be seen that the start position of the first time-domain resource is the same as that of the second time-domain resource, and the end position of the first time-domain resource is the same as that of the second time-domain resource.

With respect to case 4, the start position of the first time-domain resource is t6, and the end position of the first time-domain resource is t9. The start position of the second time-domain resource is t6, and the end position of the second time-domain resource is t7. It can be seen that the start position of the first time-domain resource is the same as that of the second time-domain resource, and the end position of the first time-domain resource is within the active period of the cell DRX.

Hereinafter, the behavior of the terminal device will be illustrated respectively for two cases: the case where the first uplink transmission includes a preconfigured uplink channel or signal, and the case where the first uplink transmission includes a dynamically scheduled uplink channel or signal.
(1) The first uplink transmission includes the preconfigured uplink channel or signal.

In the case where the first uplink transmission includes the preconfigured uplink channel or signal, the terminal device refrains from transmitting the first uplink transmission on the second target time-domain resource, including: the terminal device refrains from transmitting the first uplink transmission on the second time-domain resource, wherein the second target time-domain resource includes the second time-domain resource. That is, regardless of the positional relationship between the first time-domain resource and the second time-domain resource being any of the above cases 1 to 4, in the case where the first uplink transmission includes the preconfigured uplink channel or signal, the terminal device refrains from transmitting the first uplink transmission on the second time-domain resource.

In some embodiments, the terminal device refrains from transmitting the first uplink transmission on the first time-domain resource, wherein the second target time-domain resource includes the first time-domain resource. With respect to this case, the terminal device refrains from transmitting the first uplink transmission on the second time-domain resource, including: the terminal device refrains from transmitting the first uplink transmission on the first time-domain resource. That is, as long as some resources in the first time-domain resource belong to the non-active period of the cell DRX, the terminal device refrains from transmitting the first uplink transmission on the first time-domain resource.

In some embodiments, the terminal device transmits the first uplink transmission on a time-domain resource other than the second time-domain resource within the first time-domain resource. The first target time-domain resource includes the time-domain resource other than the second time-domain resource within the first time-domain resource. That is, the terminal device refrains from transmitting the first uplink transmission on a time-domain resource within the non-active period of the cell DRX in the first time-domain resource, but transmits the first uplink transmission on a time-domain resource not within the non-active period of the cell DRX in the first time-domain resource.

In some embodiments, the terminal device transmits the first uplink transmission on a time-domain resource that precedes the second time-domain resource in the first time-domain resource, and refrains from transmitting the first uplink transmission on a time-domain resource that follows the second time-domain resource in the first time-domain resource. The first target time-domain resource includes the time-domain resource that precedes the second time-domain resource in the first time-domain resource, and the second target time-domain resource includes the time-domain resource that follows the second time-domain resource in the first time-domain resource. For example, in case 1, the terminal device transmits the first uplink transmission on a time-domain resource belonging to the active period of the cell DRX in the first time-domain resource (i.e., the time-domain resource from t1 to t2). In case 2, the terminal device transmits the first uplink transmission on a time-domain resource belonging to the active period of the previous cell DRX in the first time-domain resource (i.e., the time-domain resources from t1 to t2), and refrains from transmitting the first uplink transmission on a time-domain resource belonging to the active period of the next cell DRX in the first time-domain resource (i.e., the time-domain resources from t7 to t8). In case 4, the terminal device refrains from transmitting the first uplink transmission on the time-domain resource belonging to the active period of the cell DRX in the first time-domain resource (i.e., the time-domain resource from t7 to t9). That is, if the time-domain resource not belonging to the non-active period of the cell DRX in the first time-domain resource is located at the beginning of the first time-domain resource, the terminal device transmits the first uplink transmission; if the time-domain resource not belonging to the non-active period of the cell DRX in the first time-domain resource is located at the end of the first time-domain resource, the terminal device refrains from transmitting the first uplink transmission.

In some embodiments, the terminal device refrains from transmitting the first uplink transmission on the time-domain resource that precedes the second time-domain resource in the first time-domain resource, and transmits the first uplink transmission on the time-domain resource that follows the second time-domain resource in the first time-domain resource. The first target time-domain resource includes the time-domain resource that follows the second time-domain resource in the first time-domain resource, and the second target time-domain resource includes the time-domain resource that precedes the second time-domain resource in the first time-domain resource. For example, in case 1, the terminal device refrains from transmitting the first uplink transmission on the time-domain resource belonging to the active period of the cell DRX in the first time-domain resource (i.e., the time-domain resource from t1 to t2). In case 2, the terminal device refrains from transmitting the first uplink transmission on the time-domain resource belonging to the active period of the previous cell DRX in the first time-domain resource (i.e., the time-domain resource from t1 to t2), and transmits the first uplink transmission on the time-domain resource belonging to the active period of the next cell DRX in the first time-domain resource (i.e., the time-domain resource from t7 to t8). In case 4, the terminal device transmits the first uplink transmission on the time-domain resource belonging to the active period of the cell DRX in the first time-domain resource (i.e., the time-domain resource from t7 to t9). That is, if the time-domain resource not belonging to the active period of the cell DRX in the first time-domain resource is located at the beginning of the first time-domain resource, the terminal device refrains from transmitting the first uplink transmission; if the time-domain resource not belonging to the active period of the cell DRX in the first time-domain resource is located at the end of the first time-domain resource, the terminal device transmits the first uplink transmission.

In some embodiments, in the case where the first uplink transmission includes the preconfigured uplink channel or signal, the terminal device transmits the first uplink transmission on the first target time-domain resource, including: in the case where the second time-domain resource is absent, the terminal device transmits the first uplink transmission on the first time-domain resource, wherein the first target time-domain resource includes the first time-domain resource. That is, as long as the first time-domain resource does not belong to the non-active period of the cell DRX, the terminal device transmits the first uplink transmission on all of the first time-domain resource.

In some embodiments, the time-domain resource not belonging to the non-active period of cell DRX includes at least one of the following cases: a time-domain resource belonging to the active period of the cell DRX, and a time-domain resource in the case where no cell DRX is present (such as a time-domain resource after the deactivation of the cell DRX takes effect).

In some embodiments, the terminal device refrains from transmitting the first uplink transmission, including at least one of the following cases: the terminal device cancels the transmission of the first uplink transmission, or the terminal device does not prepare the first uplink transmission.

(2) The first uplink transmission includes the dynamically scheduled uplink channel or signal.

In the case where the first uplink transmission includes the dynamically scheduled uplink channel or signal, the terminal device transmits the first uplink transmission on the first target time-domain resource, including: the terminal device transmits the first uplink transmission on the first time-domain resource, wherein the first target time-domain resource includes the first time-domain resource. That is, regardless of the positional relationship between the first time-domain resource and the second time-domain resource being any of the above cases 1 to 4, in the case where the first uplink transmission includes the dynamically scheduled uplink channel or signal, the terminal device transmits the first uplink transmission.

It should be understood that in the related art, if the PUCCH carrying HARQ-ACK information collides with the preconfigured uplink channel or signal to be transmitted by the terminal device (such as the CG-PUSCH or the PUSCH carrying SP-CSI) in the time domain, the terminal device can multiplex the HARQ-ACK information on the CG-PUSCH or the PUSCH carrying SP-CSI for transmission, that is, the terminal device only transmits the PUSCH carrying the HARQ-ACK information. Since during the non-active period of the cell DRX, the terminal device needs to transmit the PUCCH carrying HARQ-ACK information but does not expect the terminal device to transmit the preconfigured uplink channel or signal (such as the CG-PUSCH or the PUSCH carrying SP-CSI), in the case where the PUCCH carrying HARQ-ACK information collides with the CG-PUSCH or the PUSCH carrying SP-CSI to be transmitted by the terminal device in the time-domain resource during the non-active period of the cell DRX, the behavior of the terminal device needs to be specified.

For the case where the first uplink transmission includes a preconfigured PUSCH (such as the CG-PUSCH or the PUSCH carrying SP-CSI) and the PUCCH carrying HARQ-ACK information that are overlapped in the time domain, the terminal device transmits the first uplink transmission on the first target time-domain resource, including one of the following cases a~h.

Case a: The terminal device transmits the PUCCH carrying HARQ-ACK information.

Case b: The terminal device transmits a preconfigured PUSCH carrying the HARQ-ACK information.

Case c: In the case where it is determined based on first configuration information that the HARQ-ACK information and the preconfigured PUSCH are not multiplexed, the terminal device transmits the PUCCH carrying the HARQ-ACK information.

Case d: In the case where it is determined based on the first configuration information that the HARQ-ACK information and the preconfigured PUSCH are multiplexed, the terminal device transmits the preconfigured PUSCH carrying the HARQ-ACK information.

Case e: In the case where the non-active period of the cell DRX is determined via a DCI format, or in the case where it is determined, based on second configuration information, to activate or deactivate the cell DRX using the DCI format, the terminal device transmits the PUCCH carrying HARQ-ACK information.

Case f: In the case where the non-active period of the cell DRX is determined via a DCI format, or in a case where it is determined, based on second configuration information, to activate or deactivate the cell DRX using the DCI format, the terminal device transmits the preconfigured PUSCH carrying the HARQ-ACK information.

Case g: In the case where the non-active period of the cell DRX is determined via RRC signaling, or in the case where it is determined, based on third configuration information, to configure the cell DRX using RRC signaling, the terminal device transmits the PUCCH carrying HARQ-ACK information.

Case h: In the case where the non-active period of the cell DRX is determined via RRC signaling, or in the case where it is determined, based on third configuration information, to configure the cell DRX using RRC signaling, the terminal device transmits the preconfigured PUSCH carrying the HARQ-ACK information.

In some embodiments, the preconfigured PUSCH includes the CG-PUSCH or the PUSCH carrying SP-CSI.

In some embodiments, in the case where the preconfigured PUSCH and the PUCCH carrying HARQ-ACK information are overlapped on a third time-domain resource, the terminal device transmits the PUCCH carrying HARQ-ACK information, including: in the case where the third time-domain resource is partially or fully overlapped with the second time-domain resource, the terminal device transmits the PUCCH carrying HARQ-ACK information on the third time-domain resource; or, in the case where the third time-domain resource and the second time-domain resource are non-overlapped, the terminal device transmits the PUCCH carrying HARQ-ACK information on the third time-domain resource. Here, the first target time-domain resource includes the third time-domain resource.

In some embodiments, in the case where the first uplink transmission includes the preconfigured PUSCH and the PUCCH carrying HARQ-ACK information, the terminal device transmits the PUCCH carrying HARQ-ACK information and refrains from transmitting the preconfigured PUSCH.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on a third time-domain resource, and the third time-domain resource is partially or fully overlapped with the second time-domain resource, the terminal device transmits the PUCCH carrying HARQ-ACK information on the third time-domain resource, and/or the terminal device refrains from transmitting the preconfigured PUSCH. The terminal device refraining from transmitting the preconfigured PUSCH may mean that the terminal device refrains from transmitting the preconfigured PUSCH on the third time-domain resource, or refrains from transmitting the preconfigured PUSCH on the second time-domain resource, or refrains from transmitting the preconfigured PUSCH on the first time-domain resource.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on a third time-domain resource, and the third time-domain resource and the second time-domain resource are non-overlapped, the terminal device transmits the PUCCH carrying HARQ-ACK information on the third time-domain resource, and/or the terminal device refrains from transmitting the preconfigured PUSCH. That is, in this case, as long as the PUCCH carrying HARQ-ACK information and the preconfigured PUSCH are overlapped in the time domain, the terminal device refrains from transmitting the preconfigured PUSCH. The terminal device refraining from transmitting the preconfigured PUSCH may mean that the terminal device refrains from transmitting the preconfigured PUSCH on the third time-domain resource, or refrains from transmitting the preconfigured PUSCH on the second time-domain resource, or refrains from transmitting the preconfigured PUSCH on the first time-domain resource.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on a third time-domain resource, and the third time-domain resource and the second time-domain resource are non-overlapped, the terminal device transmits the preconfigured PUSCH carrying the HARQ-ACK information on the third time-domain resource, and/or the terminal device refrains from transmitting the preconfigured PUSCH on the second time-domain resource. That is, in this case, in the case where the preconfigured PUSCH and the PUCCH carrying HARQ-ACK information are not overlapped on the time-domain resource of the non-active period of the cell DRX, the terminal device still multiplexes the HARQ-ACK information onto the preconfigured PUSCH for transmission.

In some embodiments, in the case where the preconfigured PUSCH and the PUCCH carrying HARQ-ACK information are overlapped on a third time-domain resource, the terminal device transmits the preconfigured PUSCH carrying the HARQ-ACK information, including: in the case where the third time-domain resource is partially or fully overlapped with the second time-domain resource, the terminal device transmits the preconfigured PUSCH carrying the HARQ-ACK information on the third time-domain resource; or, in the case where the third time-domain resource and the second time-domain resource are non-overlapped, the terminal device transmits the preconfigured PUSCH carrying the HARQ-ACK information on the third time-domain resource. Here, the first target time-domain resource includes the third time-domain resource.

In some embodiments, in the case where the first uplink transmission includes the preconfigured PUSCH and the PUCCH carrying HARQ-ACK information, the terminal device transmits the preconfigured PUSCH carrying the HARQ-ACK information.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on a third time-domain resource, and the third time-domain resource is partially or fully overlapped with the second time-domain resource, the terminal device transmits the preconfigured PUSCH carrying the HARQ-ACK information on the third time-domain resource, and/or the terminal device refrains from transmitting the preconfigured PUSCH on a time-domain resource other than the third time-domain resource in the second time-domain resource.

In some embodiments, in the case where the first uplink transmission includes a preconfigured PUSCH and a PUCCH carrying HARQ-ACK information, in the case where the preconfigured PUSCH and the PUCCH carrying HARQ-ACK information are overlapped on the third time-domain resource, and the third time-domain resource and the second time-domain resource are non-overlapped, the terminal device transmits the preconfigured PUSCH carrying the HARQ-ACK information on the third time-domain resource, and/or the terminal device refrains from transmitting the preconfigured PUSCH on the second time-domain resource.

In some embodiments, in the case where the first uplink transmission includes the preconfigured PUSCH and the PUCCH carrying HARQ-ACK information, the behavior of the terminal device is determined based on first configuration information. In some embodiments, the first configuration information is used to configure whether the HARQ-ACK information and the preconfigured PUSCH are multiplexed during the non-active period of the cell DRX. In some embodiments, in the case where it is determined based on the first configuration information that the HARQ-ACK information and the preconfigured PUSCH are not multiplexed, the terminal device transmits the PUCCH carrying HARQ-ACK information and refrains from transmitting the preconfigured PUSCH. In some embodiments, in the case where it is determined based on the first configuration information that the HARQ-ACK information and the preconfigured PUSCH are multiplexed, the terminal device transmits the preconfigured PUSCH carrying the HARQ-ACK information.

In some embodiments, in the case where the first uplink transmission includes the preconfigured PUSCH and the PUCCH carrying HARQ-ACK information (in the case where the PUCCH carrying HARQ-ACK information collides with the preconfigured PUSCH to be transmitted by the terminal device in the time-domain resource within the non-active period of the cell DRX), if the non-active period of the cell DRX is determined via the RRC signaling (or it is determined, based on the third configuration information, to configure the cell DRX using RRC signaling), the terminal device transmits the PUCCH carrying HARQ-ACK information and refrains from transmitting the preconfigured PUSCH; and/or, if the non-active period of the cell DRX is determined via a first DCI format (or it is determined, based on the second configuration information, to activate or deactivate the cell DRX using the DCI format), the terminal device transmits the preconfigured PUSCH carrying the HARQ-ACK information.

In some embodiments, the aforementioned first DCI format is the DCI format 2_9.

That is, in the case where the non-active period of the cell DRX is determined via the RRC signaling, if the PUCCH carrying HARQ-ACK information collides with the preconfigured PUSCH to be transmitted by the terminal device in the time-domain resource within the non-active period of the cell DRX, the terminal device transmits the PUCCH carrying HARQ-ACK information and refrains from transmitting the preconfigured PUSCH. In the case where the non-active period of the cell DRX is determined via the DCI signaling, if the PUCCH carrying HARQ-ACK information collides with the preconfigured PUSCH to be transmitted by the terminal device in the time-domain resource within the non-active period of the cell DRX, the terminal device transmits the preconfigured PUSCH carrying the HARQ-ACK information. This is mainly because the terminal device has a certain bit error rate when monitoring DCI formats, that is, there may be situations where the terminal device refrains from receiving the DCI format for activating or deactivating the cell DRX, and thus the terminal device may misunderstand the non-active period of the cell. To avoid affecting the transmission of the HARQ-ACK information and the preconfigured PUSCH due to misunderstanding of the non-active period of the cell, the behavior of the terminal device can be specified, such as always transmitting the preconfigured PUSCH carrying the HARQ-ACK information or always transmitting the PUCCH carrying HARQ-ACK information.

In the aforementioned manner, in the case where the non-active period of the cell DRX is determined via the DCI signaling, and the PUCCH carrying HARQ-ACK information collides with the preconfigured PUSCH to be transmitted by the terminal device in the time-domain resource within the non-active period of the cell DRX, it is stipulated that the HARQ-ACK information should always be multiplexed onto the preconfigured PUSCH for transmission, or the PUCCH carrying HARQ-ACK information should always be transmitted, thereby avoiding inconsistencies in the understanding of the uplink channel or signal to be transmitted between the network device and the terminal device.

In some embodiments, in the case where the first uplink transmission includes the preconfigured PUSCH and the PUCCH carrying HARQ-ACK information (in the case where the PUCCH carrying HARQ-ACK information collides with the preconfigured PUSCH to be transmitted by the terminal device in the time-domain resource within the non-active period of the cell DRX), if the non-active period of the cell DRX is determined via the RRC signaling (or it is determined, based on the third configuration information, to configure the cell DRX using the RRC signaling), the terminal device transmits the preconfigured PUSCH carrying the HARQ-ACK information; and/or, if the non-active period of the cell DRX is determined via the first DCI format (or it is determined, based on the second configuration information, to activate or deactivate the cell DRX using the DCI format), the terminal device transmits the PUCCH carrying HARQ-ACK information and refrains from transmitting the preconfigured PUSCH.

In some embodiments, in the case where the terminal device is configured to activate or deactivate the cell DRX via the DCI format, if the first uplink transmission includes the preconfigured PUSCH and the PUCCH carrying HARQ-ACK information, the terminal device transmits the PUCCH carrying HARQ-ACK information and refrains from transmitting the preconfigured PUSCH.

In some embodiments, if the terminal device is configured to activate or deactivate the cell DRX via the DCI format, in the case where the preconfigured PUSCH and the PUCCH carrying HARQ-ACK information are overlapped in the time domain, the terminal device always disregards the multiplexing of the preconfigured PUSCH and the PUCCH carrying HARQ-ACK information, that is, the terminal device always transmits the PUCCH carrying HARQ-ACK information. For example, if the terminal device is configured to activate or deactivate the cell DRX via the DCI format, in the case where the CG-PUSCH or the PUSCH carrying SP-CSI is overlapped with the PUCCH carrying HARQ-ACK information in the time-domain resource within the non-active period of the cell DRX, the terminal device transmits the PUCCH carrying HARQ-ACK information; and in the case where the CG-PUSCH or the PUSCH carrying SP-CSI is overlapped with the PUCCH carrying HARQ-ACK information in the time-domain resource within the active period of the cell DRX, the terminal device still transmits the PUCCH carrying HARQ-ACK information.

In some embodiments, if the cell DRX is configured via the RRC signaling, in the case where the preconfigured PUSCH and the PUCCH carrying HARQ-ACK information are overlapped in the time domain during the non-active period of the cell DRX, the terminal device does not consider the multiplexing of the preconfigured PUSCH and the PUCCH carrying HARQ-ACK information. That is, the terminal device transmits the PUCCH carrying HARQ-ACK information during the non-active period of the cell DRX. For example, if the cell DRX is configured via the RRC signaling, in the case where the CG-PUSCH or the PUSCH carrying SP-CSI is overlapped with the PUCCH carrying HARQ-ACK information in time-domain resource within the non-active period of the cell DRX, the terminal device transmits the PUCCH carrying HARQ-ACK information; or in the case where the CG-PUSCH or the PUSCH carrying SP-CSI is overlapped with the PUSCH carrying HARQ-ACK information in time-domain resource within the active period of the cell DRX, the terminal device transmits the PUSCH carrying HARQ-ACK information.

It should be understood that a certain processing time is required for the terminal device to prepare for transmitting the first uplink transmission or to cancel the transmission of the first uplink transmission. Once the terminal device has begun preparing for the transmission of the first uplink transmission, if the terminal device subsequently receives signaling instructing to cancel the first uplink transmission, the terminal device cannot cancel the first uplink transmission. Alternatively, if the terminal device receives signaling instructing to transmit the first uplink transmission, but the time at which the signaling is received is less than the processing time from the scheduled transmitting time of the first uplink transmission, the terminal device will be unable to transmit the first uplink transmission due to insufficient preparation time.

In some embodiments of the present disclosure, whether the terminal device transmits the first uplink transmission needs to be determined based on the overlap between the first time-domain resource occupied by the first uplink transmission and the time-domain resource of the non-active period of the cell DRX. In the case where the non-active period of the cell DRX is determined via the first DCI format, in addition to considering the impact of the non-active period of the cell DRX, the impact of the processing time for the terminal device to cancel the first uplink transmission and/or prepare for the first uplink transmission should also be considered. That is, the aforementioned behavior of the terminal device to transmit or not to transmit the first uplink transmission is also affected by the first condition and/or the second condition.

In some embodiments, the terminal device transmits the first uplink transmission on the first target time-domain resource, including: in the case where the first condition is met, the terminal device transmits the first uplink transmission on the first target time-domain resource; and/or, in the case where the first condition is not met, the terminal device refrains from transmitting the first uplink transmission on the first target time-domain resource.

In some embodiments, some time-domain resources in the first target time-domain resource do not belong to the non-active period of the cell DRX.

In some embodiments, all time-domain resources in the first target time-domain resource do not belong to the non-active period of the cell DRX.

In some embodiments, the first condition includes a condition related to a first processing time length. As an example, the first processing time length refers to a processing time length for the terminal device to prepare the first uplink transmission.

In some embodiments, the terminal device transmits the first uplink transmission on the first target time-domain resource, including: the terminal device transmits at least part of the transmission in the first uplink transmission on the first target time-domain resource.

In some embodiments, in the case where the non-active period of cell DRX is determined via the first DCI format, if the first condition is met, the terminal device transmits the first uplink transmission on the first target time-domain resource; and/or, if the first condition is not met, the terminal device refrains from transmitting the first uplink transmission on the first target time-domain resource, wherein the first target time-domain resource does not belong to the non-active period of the cell DRX.

In some embodiments, the first target time-domain resource includes the time-domain resource determined in the aforementioned embodiments for transmitting the first uplink transmission.

In some embodiments, the first target time-domain resource includes at least one of: the first time-domain resource, the time-domain resource other than the second time-domain resource in the first time-domain resource, the time-domain resource that precedes the second time-domain resource in the first time-domain resource, or the time-domain resource that follows the second time-domain resource in the first time-domain resource.

For example, the first target time-domain resource includes the first time-domain resource, and the terminal device transmits the first uplink transmission on the first time-domain resource, including: in the case where the first condition is met, the terminal device transmits the first uplink transmission on the first time-domain resource; and/or, in the case where the first condition is not met, the terminal device refrains from transmitting the first uplink transmission on the first time-domain resource.

For another example, the first target time-domain resource includes the time-domain resource other than the second time-domain resource in the first time-domain resource. The terminal device transmits the first uplink transmission on the time-domain resource other than the second time-domain resource in the first time-domain resource, including: in the case where the first condition is met, the terminal device transmits the first uplink transmission on the time-domain resource other than the second time-domain resource in the first time-domain resource; and/or, in the case where the first condition is not met, the terminal device refrains from transmitting the first uplink transmission on the time-domain resource other than the second time-domain resource in the first time-domain resource.

For another example, the first target time-domain resource includes the time-domain resource that precedes the second time-domain resource in the first time-domain resource. The terminal device transmits the first uplink transmission on the time-domain resource that precedes the second time-domain resource in the first time-domain resource, including: in the case where the first condition is met, the terminal device transmits the first uplink transmission on the time-domain resource that precedes the second time-domain resource in the first time-domain resource; and/or, in the case where the first condition is not met, the terminal device refrains from transmitting the first uplink transmission on the time-domain resource that precedes the second time-domain resource in the first time-domain resource.

For another example, the first target time-domain resource includes the time-domain resource that follows the second time-domain resource in the first time-domain resource. The terminal device transmits the first uplink transmission on the time-domain resource that follows the second time-domain resource in the first time-domain resource, including: in the case where the first condition is met, the terminal device transmits the first uplink transmission on the time-domain resource that follows the second time-domain resource in the first time-domain resource; and/or, in the case where the first condition is not met, the terminal device refrains from transmitting the first uplink transmission on the time-domain resource that follows the second time-domain resource in the first time-domain resource.

In some embodiments, the first processing time length condition refers to a condition related to the first processing time length. Meeting the first condition includes meeting the first processing time length condition, and/or, not meeting the first condition includes not meeting the first processing time length condition. In the case where the first condition is met, the terminal device transmits the first uplink transmission on the first target time-domain resource; and/or, in the case where the first condition is not met, the terminal device refrains from transmitting the first uplink transmission on the first target time-domain resource, which can be replaced by: in the case where the first processing time length condition is met, the terminal device transmits the first uplink transmission on the first target time-domain resource; and/or, in the case where the first processing time length condition is not met, the terminal device refrains from transmitting the first uplink transmission on the first target time-domain resource.

In some embodiments, the first condition (or the first processing time length condition) includes: the duration of the interval between a first time-domain position and the start position of the first target time-domain resource is greater than or equal to the first processing time length. In this case, meeting the first processing time length condition includes: the duration of the interval between the first time-domain position and the start position of the first target time-domain resource is greater than or equal to the first processing time length; and/or, not meeting the first processing time length condition includes: the duration of the interval between the first time-domain position and the start position of the first target time-domain resource is less than the first processing time length.

In some embodiments, the first condition (or the first processing time length condition) includes: the duration of the interval between the first time-domain position and the start position of the first time-domain resource is greater than or equal to the first processing time length. In this case, meeting the first processing time length condition includes: the duration of the interval between the first time-domain position and the start position of the first time-domain resource is greater than or equal to the first processing time length; and/or, not meeting the first processing time length condition includes: the duration of the interval between the first time-domain position and the start position of the first time-domain resource is less than the first processing time length.

In some embodiments, the first time-domain position includes one of the following cases:
the terminal device receives the last symbol of a physical downlink control channel (PDCCH) reception carrying the first DCI format;
the terminal device receives an end position of a slot where the last symbol of the PDCCH reception carrying the first DCI format is located;
the terminal device is configured to receive the last symbol of the PDCCH reception used for transmitting the first DCI format; that is, the terminal device detects the last symbol of the control resource set (CORESET) of the first DCI format;
the terminal device is configured to receive an end position of a slot where the last symbol of the PDCCH reception used for transmitting the first DCI format is located;
effective time for activating the cell DRX is determined based on the first DCI format; for example, the starting time of the slot m1+6 on the downlink activated BWP of the first cell in FIG. 4; or the starting time of the first slot on the uplink activated BWP of the second cell in FIG. 4;
effective time for deactivating the cell DRX is determined based on the first DCI format; for example, the starting time of the slot m2+6 on the downlink activated BWP of the first cell in FIG. 4; or the starting time of the second slot on the uplink activated BWP of the second cell in FIG. 4; or
effective time of the first DCI format; for example, the start position of slot m+d on the downlink activated BWP of the first cell determined based on Table 1; or the start position of the first slot;
wherein the first DCI format is used to indicate the activation or deactivation of the cell DRX, and/or the first DCI format is used to indicate that the cell enters a network energy-saving mode, such as indicating that the cell is switched off.

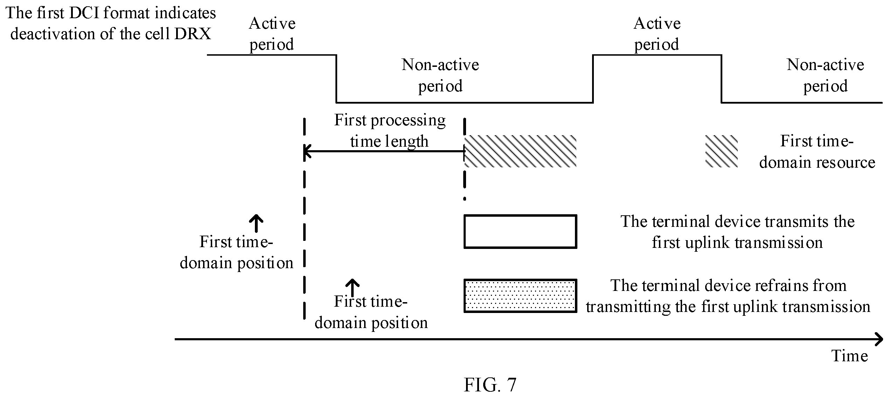

The following example illustrates the case where all time-domain resources in the first time-domain resource do not belong to the non-active period of the cell DRX. As illustrated in FIG. 7, the first time-domain resource is a time-domain resource occupied by the uplink channel or signal preconfigured by the terminal device. Originally, the first time-domain resource belongs to the non-active period of the cell DRX. However, based on the received first DCI format indicating the deactivation of the cell DRX, the terminal device determines that the first time-domain resource does not belong to the non-active period of the cell DRX. Therefore, the terminal device should transmit the first uplink transmission on the first time-domain resource. In this case, the terminal device needs to determine whether to transmit the first uplink transmission based on whether the first processing time length condition is met between the first time-domain position and the start position of the first time-domain resource. Specifically, in the case where the first time-domain position is within the first processing time length associated with the first time-domain resource, the terminal device refrains from transmitting the first uplink transmission; otherwise, the terminal device transmits the first uplink transmission.

In some embodiments, the terminal device refrains from transmitting the first uplink transmission on the second target time-domain resource, including: in the case where the second condition is met, the terminal device refrains from transmitting the first uplink transmission on the second target time-domain resource; and/or, in the case where the second condition is not met, the terminal device transmits the first uplink transmission on the second target time-domain resource.

In some embodiments, a portion of the second target time-domain resource belongs to the non-active period of the cell DRX.

In some embodiments, all time-domain resources within the second target time-domain resource belong to the non-active period of the cell DRX.

In some embodiments, the second condition includes a condition related to the second processing time length. As an example, the second processing time length refers to a processing time length for the terminal device to cancel the first uplink transmission.

In some embodiments, the terminal device refrains from transmitting the first uplink transmission on the second target time-domain resource, including: the terminal device refrains from transmitting at least part of the first uplink transmission on the second target time-domain resource.

In some embodiments, in the case where the non-active period of the cell DRX is determined via the first DCI format, if the second condition is met, the terminal device refrains from transmitting the first uplink transmission on the second target time-domain resource; and/or, if the second condition is not met, the terminal device transmits the first uplink transmission on the second target time-domain resource within the first time-domain resource, wherein at least part of the time-domain resource in the second target time-domain resource belong to the non-active period of the cell DRX.

In some embodiments, the second target time-domain resources include the time-domain resource determined in the aforementioned embodiments not to be used for transmitting the first uplink transmission.

In some embodiments, the second target time-domain resource includes at least one of: the second time-domain resource, the first time-domain resource, the time-domain resource that precedes the second time-domain resource in the first time-domain resource, or the time-domain resource that follows the second time-domain resource in the first time-domain resource.

For example, the second target time-domain resource includes the second time-domain resource, and the terminal device refrains from transmitting the first uplink transmission on the second time-domain resource, including: in the case where the second condition is met, the terminal device refrains from transmitting the first uplink transmission on the second time-domain resource; and/or, in the case where the second condition is not met, the terminal device transmits the first uplink transmission on the second time-domain resource.

For another example, the second target time-domain resource includes the first time-domain resource, and the terminal device refrains from transmitting the first uplink transmission on the first time-domain resource, including: in the case where the second condition is met, the terminal device refrains from transmitting the first uplink transmission on the first time-domain resource; and/or, in the case where the second condition is not met, the terminal device transmits the first uplink transmission on the first time-domain resource.

For another example, the second target time-domain resource includes the time-domain resource that precedes the second time-domain resource in the first time-domain resource. The terminal device refrains from transmitting the first uplink transmission on the time-domain resource that precedes the second time-domain resource in the first time-domain resource, including: in the case where the second condition is met, the terminal device refrains from transmitting the first uplink transmission on the time-domain resource that precedes the second time-domain resource in the first time-domain resource; and/or, in the case where the second condition is not met, the terminal device transmits the first uplink transmission on the time-domain resource that precedes the second time-domain resource in the first time-domain resource.

For another example, the second target time-domain resource includes the time-domain resource that follows the second time-domain resource in the first time-domain resource. The terminal device refrains from transmitting the first uplink transmission on the time-domain resource that follows the second time-domain resource in the first time-domain resource, including: in the case where the second condition is met, the terminal device refrains from transmitting the first uplink transmission on the time-domain resource that follows the second time-domain resource in the first time-domain resource; and/or, in the case where the second condition is not met, the terminal device transmits the first uplink transmission on the time-domain resource that follows the second time-domain resource in the first time-domain resource.

In some embodiments, the second processing time length condition refers to a condition related to the second processing time length. Meeting the second condition includes meeting the second processing time length condition, and/or failing to meet the second condition includes failing to meet the second processing time length condition. In the case where the second condition is met, the terminal device refrains from transmitting the first uplink transmission on the second target time-domain resource; and/or, in the case where the second condition is not met, the terminal device transmits the first uplink transmission on the second target time-domain resource, which can be replaced by: in the case where the second processing time length condition is met, the terminal device refrains from transmitting the first uplink transmission on the second target time-domain resource; and/or, in the case where the second processing time length condition is not met, the terminal device transmits the first uplink transmission on the second target time-domain resource.

In some embodiments, the second condition (or the second processing time length condition) includes: the duration of the interval between a second time-domain position and the start position of the second target time-domain resource is greater than or equal to the second processing time length. In this case, meeting the second processing time length condition includes: the duration of the interval between the second time-domain position and the start position of the second target time-domain resource is greater than or equal to the second processing time length; and/or, not meeting the second processing time length condition includes: the duration of the interval between the second time-domain position and the start position of the second target time-domain resource is less than the second processing time length.

In some embodiments, the second condition (or the second processing time length condition) includes: the duration of the interval between the second time-domain position and the start position of the first time-domain resource is greater than or equal to the second processing time length. In this case, meeting the second processing time length condition includes: the duration of the interval between the second time-domain position and the start position of the first time-domain resource is greater than or equal to the second processing time length; and/or, not meeting the second processing time length condition includes: the duration of the interval between the second time-domain position and the start position of the first time-domain resource is less than the second processing time length.

In some embodiments, the second time-domain position includes one of the following cases:
the terminal device receives the last symbol of the PDCCH reception carrying the first DCI format;
the terminal device receives the end position of the slot where the last symbol of the PDCCH reception carrying the first DCI format is located;
the terminal device is configured to receive the last symbol of the PDCCH reception used for transmitting the first DCI format; that is, the terminal device detects the last symbol of the CORESET of the first DCI format;
the terminal device is configured to receive the end position of the slot where the last symbol of the PDCCH reception used for transmitting the first DCI format is located;
the effective time for activating the cell DRX is determined based on the first DCI format; for example, the starting time of the slot m1+6 on the downlink activated BWP of the first cell in FIG. 4; or the starting time of the first slot on the uplink activated BWP of the second cell in FIG. 4;
the effective time for deactivating the cell DRX is determined based on the first DCI format; for example, the starting time of the slot m2+6 on the downlink activated BWP of the first cell in FIG. 4; or the starting time of the second slot on the uplink activated BWP of the second cell in FIG. 4; or
the effective time of the first DCI format; for example, the start position of slot m+d on the downlink activated BWP of the first cell determined based on Table 1; or the start position of the first slot;
wherein the first DCI format is used to indicate the activation or deactivation of the cell DRX, and/or the first DCI format is used to indicate that the cell enters the network energy-saving mode, such as indicating that the cell is switched off.

In some embodiments, the second processing time length and the first processing time length can either be the same or different, which is not limited in the present disclosure.

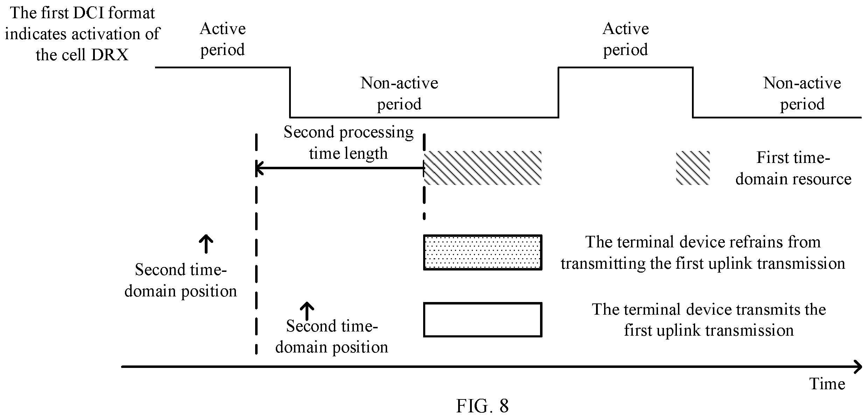

The following example illustrates the case where all time-domain resources in the first time-domain resource belong to the non-active period of the cell DRX. As illustrated in FIG. 8, the first time-domain resource is the time-domain resource occupied by the uplink channel or signal preconfigured by the terminal device. Originally, the first time-domain resource does not belong to the non-active period of the cell DRX. However, based on the received first DCI format indicating the activation of the cell DRX, the terminal device determines that the first time-domain resource belongs to the non-active period of the cell DRX. Therefore, the terminal device should refrain from transmitting the first uplink transmission on the first time-domain resource. In this case, the terminal device needs to determine whether to transmit the first uplink transmission based on whether the second processing time length condition is met between the second time-domain position and the start position of the first time-domain resource. Specifically, in the case where the second time-domain position is within the second processing time length associated with the first time-domain resource, the terminal device transmits the first uplink transmission; otherwise, the terminal device refrains from transmitting the first uplink transmission.

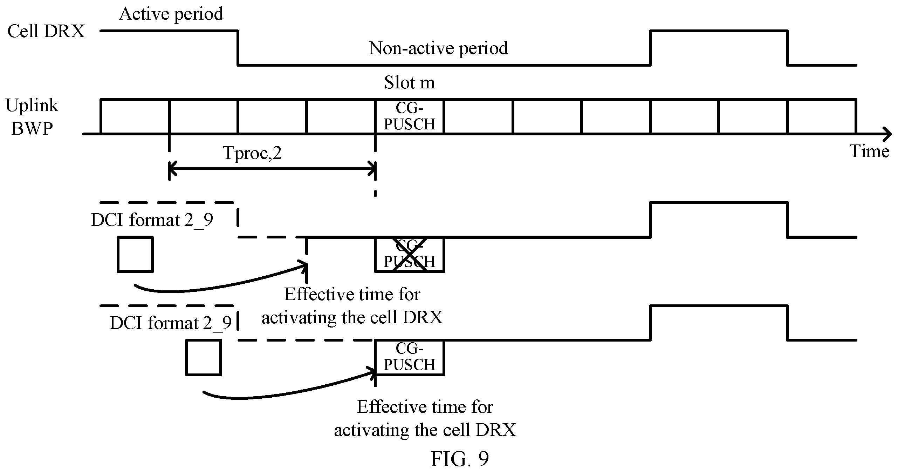

Below is another example. The first time-domain resource is slot m, wherein the first time-domain resource is the resource configured to the terminal device for transmitting preconfigured PUSCH or PUCCH. Taking the CG-PUSCH as an example, as illustrated in FIG. 9, slot m originally does not belong to the non-active period of the cell DRX. In the case where the terminal device receives the DCI format 2_9 indicating the activation of the cell DRX, the terminal device determines based on this DCI format 2_9 that slot m belongs to the non-active period of the cell DRX, in principle, the terminal device cannot use slot m to transmit the CG-PUSCH. In this case, the terminal device needs to determine whether slot m can be used to transmit the CG-PUSCH based on whether the second processing time length (e.g., Tpro,2 length) is met between the time-domain position of the received DCI format 2_9 and the start position of slot m. In the case where the time interval between the received end position of the DCI format 2_9 and the start position of slot m is greater than or equal to the Tpro,2 length, the terminal device refrains from transmitting the CG-PUSCH in slot m; or, if the terminal device has already started preparing to transmit the CG-PUSCH in slot m, and the time interval between the received end position of the DCI format 2_9 and the start position of slot m is less than the Tpro,2 length, the terminal device can transmit CG-PUSCH in slot m. In some embodiments, the Tpro,2 length is determined based on the time interval required for the terminal device to switch BWP.

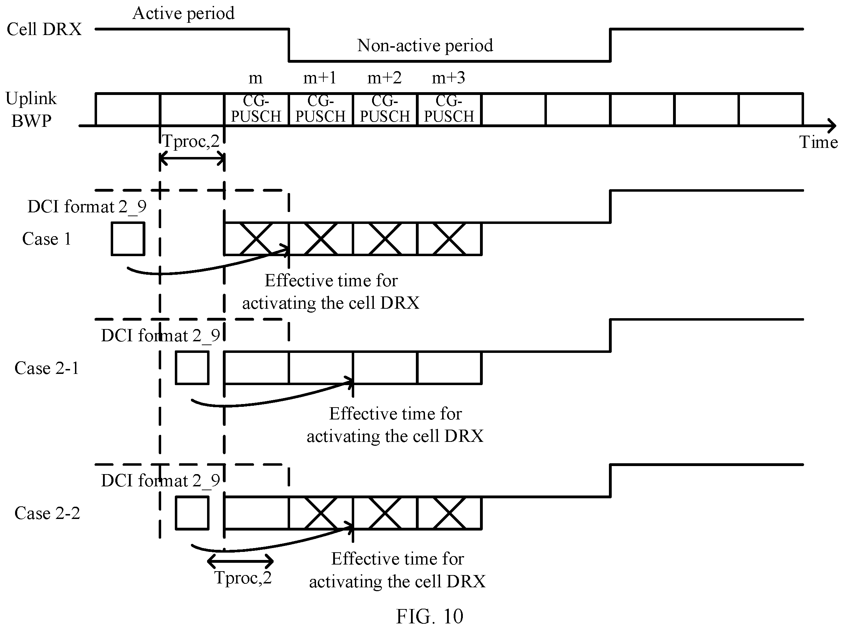

Below is another example. The first time-domain resource is slots m, m+1, m+2, and m+3, wherein the first time-domain resource is resources configured for the terminal device to repeatedly transmit preconfigured PUSCH or PUCCH. In this example, it is assumed that if some or all of the resources in the first time-domain resource are overlapped with the time-domain resource of the non-active period of the cell DRX, the terminal device should refrain from transmitting the preconfigured PUSCH or PUCCH over the first time-domain resource. Taking the CG-PUSCH as an example, as illustrated in FIG. 10, the first time-domain resource originally does not belong to the non-active period of the cell DRX. In the case where the terminal device receives DCI format 2_9 indicating the activation of cell DRX, it can be determined based on this DCI format 2_9 that some resources in the first time-domain resource belong to the non-active period of the cell DRX. That is, in principle, the terminal device should refrain from transmitting CG-PUSCH through the first time-domain resource. In this case, the terminal device needs to determine whether the terminal device can use the first time-domain resource to transmit CG-PUSCH based on whether the second processing time length (e.g., Tpro,2 length) is met between the time-domain position of the received DCI format 2_9 and the position of the first time-domain resource. In case 1, the time interval between the end position of the received DCI format 2_9 and the start position of the first time-domain resource is greater than or equal to the Tpro,2 length. In this case, the terminal device refrains from transmitting the CG-PUSCH on the first time-domain resource. In case 2, the time interval between the end position of the received DCI format 2_9 and the start position of the first time-domain resource is less than the Tpro,2 length. In this case, in one optional implementation, the terminal device can transmit the CG-PUSCH on the first time-domain resource, as illustrated in case 2-1 in FIG. 10; in another optional implementation, the terminal device can transmit the CG-PUSCH on a slot that does not meet the Tpro,2 length (i.e., slot m) in the first time-domain resource, and refrains from transmitting the CG-PUSCH on a slot that meets the Tpro,2 length (i.e., slots m+1, m+2, m+3) in the first time-domain resource, as illustrated in case 2-2 in FIG. 10.

The technical solution according to the embodiments of present disclosure presents a solution for handling uplink transmissions in the case where a terminal device is configured with the cell DRX. If the time-domain resource occupied by the uplink transmission of the terminal device is partially or fully overlapped with the time-domain resource occupied by the non-active period of the cell DRX, the terminal device can transmit the uplink transmission on the certain time-domain resource and/or refrain from transmitting the uplink transmission on the certain time-domain resource, ensuring that the network device and the terminal device have a consistent understanding of the uplink channel or signal to be transmitted, thereby enhancing the reliability of uplink transmission.

In addition, in a network energy-saving system, in the case where the terminal device is configured with the cell DRX, if the time-domain resource occupied by the terminal device's uplink transmission (preconfigured uplink transmission and/or dynamically scheduled uplink transmission) is partially or fully overlapped with the time-domain resource occupied by the non-active period of the cell DRX, according to the method described in present disclosure, the terminal device can transmit the uplink transmission or cancel the transmission of the uplink transmission under the condition that the processing time requirement is met, thus eliminating the need to increase additional costs for the terminal device.

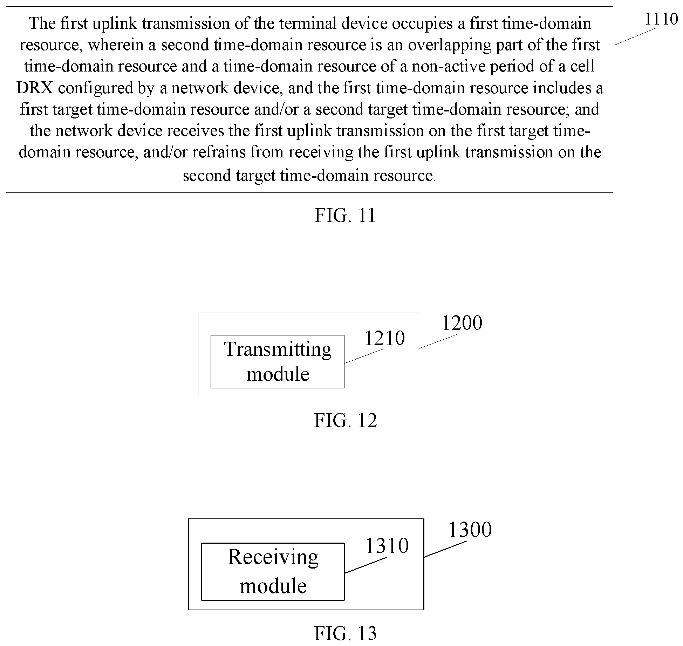

Please refer to FIG. 11, FIG. 11 illustrates a flowchart of a method for wireless communication according to another embodiment of the present disclosure. This method can be performed by a network device. The method may include the following processes.

In process 1110, a first uplink transmission of a terminal device occupies a first time-domain resource, a second time-domain resource is an overlapping part between the first time-domain resource and a time-domain resource of a non-active period of a cell DRX configured by the network device, the first time-domain resource includes a first target time-domain resource and/or a second target time-domain resource, and the network device receives the first uplink transmission on the first target time-domain resource, and/or refrains from receiving the first uplink transmission on the second target time-domain resource.

In some embodiments, the first uplink transmission includes a preconfigured uplink channel or signal. For an explanation of the preconfigured uplink channel or signal, reference may be made to the embodiments described above, which is not elaborated herein any further.

In some embodiments, the first uplink transmission includes a dynamically scheduled uplink channel or signal. For an explanation of the dynamically scheduled uplink channel or signal, please refer to the aforementioned embodiments, which is not elaborated herein any further.

Hereinafter, the behavior of network device is illustrated respectively for the two cases: the case where the first uplink transmission includes the preconfigured uplink channel or signal, and the case where the first uplink transmission includes the dynamically scheduled uplink channel or signal.
(1) The first uplink transmission includes the preconfigured uplink channel or signal.

In the case where the first uplink transmission includes the preconfigured uplink channel or signal, the network device refrains from receiving the first uplink transmission on the second target time-domain resource, including: the network device refrains from receiving the first uplink transmission on the second time-domain resource, wherein the second target time-domain resource includes the second time-domain resource. That is, regardless of the positional relationship between the first time-domain resource and the second time-domain resource being any of the above cases 1 to 4, in the case where the first uplink transmission includes the preconfigured uplink channel or signal, the network device refrains from receiving the first uplink transmission on the second time-domain resource.

In some embodiments, the network device refrains from receiving the first uplink transmission on the first time-domain resource, wherein the second target time-domain resource includes the first time-domain resource. For this case, the network device refrains from receiving the first uplink transmission on the second time-domain resource, including: the network device refrains from receiving the first uplink transmission on the first time-domain resource. That is, as long as some resources in the first time-domain resource is within the non-active period of the cell DRX, the network device refrains from receiving the first uplink transmission on the first time-domain resource.

In some embodiments, the network device receives the first uplink transmission on the time-domain resource other than the second time-domain resource within the first time-domain resource. The first target time-domain resource includes the time-domain resource other than the second time-domain resource in the first time-domain resource. That is, the network device refrains from receiving the first uplink transmission on the time-domain resource within the non-active period of the cell DRX in the first time-domain resource, but receives the first uplink transmission on the time-domain resource not within the non-active period of the cell DRX in the first time-domain resource.

In some embodiments, the network device receives the first uplink transmission on the time-domain resource that precedes the second time-domain resource in the first time-domain resource, and refrains from receiving the first uplink transmission on the time-domain resource that follows the second time-domain resource in the first time-domain resource. The first target time-domain resource includes the time-domain resource that precedes the second time-domain resource in the first time-domain resource, and the second target time-domain resource includes the time-domain resource that follows the second time-domain resource in the first time-domain resource. For example, in case 1, the network device receives the first uplink transmission on the time-domain resource belonging to the active period of the cell DRX in the first time-domain resource (i.e., the time-domain resource from t1 to t2). In case 2, the network device receives the first uplink transmission on the time-domain resource belonging to the active period of the previous cell DRX in the first time-domain resource (i.e., the time-domain resource from t1 to t2), and refrains from receiving the first uplink transmission on the time-domain resource belonging to the active period of the next cell DRX in the first time-domain resource (i.e., the time-domain resource from t7 to t8). In case 4, the network device refrains from receiving the first uplink transmission on the time-domain resource belonging to the active period of the cell DRX in the first time-domain resource (i.e., the time-domain resource from t7 to t9). That is, if the time-domain resource not belonging to the non-active period of the cell DRX in the first time-domain resource is located at the beginning of the first time-domain resource, the network device receives the first uplink transmission; if the time-domain resource not belonging to the non-active period of the cell DRX in the first time-domain resource is located at the end of the first time-domain resource, the network device refrains from receiving the first uplink transmission.

In some embodiments, the network device refrains from receiving the first uplink transmission on the time-domain resource that precedes the second time-domain resource in the first time-domain resource, and receives the first uplink transmission on the time-domain resource that follows the second time-domain resource in the first time-domain resource. The first target time-domain resource includes the time-domain resource that follows the second time-domain resource in the first time-domain resource, and the second target time-domain resource includes the time-domain resource that precedes the second time-domain resource in the first time-domain resource. For example, in case 1, the network device refrains from receiving the first uplink transmission on the time-domain resource belonging to the active period of the cell DRX in the first time-domain resource (i.e., the time-domain resource from t1 to t2). In case 2, the network device refrains from receiving the first uplink transmission on the time-domain resource belonging to the active period of the previous cell DRX in the first time-domain resource (i.e., the time-domain resource from t1 to t2), and receives the first uplink transmission on the time-domain resource belonging to the active period of the next cell DRX in the first time-domain resource (i.e., the time-domain resource from t7 to t8). In case 4, the network device receives the first uplink transmission on the time-domain resource belonging to the active period of the cell DRX in the first time-domain resource (i.e., the time-domain resource from t7 to t9). That is, if the time-domain resource not belonging to the non-active period of the cell DRX in the first time-domain resource is located at the beginning of the first time-domain resource, the network device refrains from receiving the first uplink transmission; if the time-domain resource not belonging to the non-active period of the cell DRX in the first time-domain resource is located at the end of the first time-domain resource, the network device receives the first uplink transmission.

In some embodiments, in the case where the first uplink transmission includes the preconfigured uplink channel or signal, the network device receives the first uplink transmission on the first target time-domain resource, including: in the case where the second time-domain resource is absent, the network device receives the first uplink transmission on the first time-domain resource, wherein the first target time-domain resource includes the first time-domain resource. That is, as long as the first time-domain resource does not belong to the non-active period of the cell DRX, the network device receive the first uplink transmission on all of the first time-domain resource.

In some embodiments, the terminal device refrains from transmitting the first uplink transmission, including at least one of the following cases: the terminal device cancels the transmission of the first uplink transmission, or the terminal device does not prepare for the first uplink transmission.

(2) The first uplink transmission includes the dynamically scheduled uplink channel or signal.

In the case where the first uplink transmission includes the dynamically scheduled uplink channel or signal, the network device receives the first uplink transmission on the first target time-domain resource, including: the network device receives the first uplink transmission on the first time-domain resource; wherein the first target time-domain resource includes the first time-domain resource. That is, regardless of the positional relationship between the first time-domain resource and the second time-domain resource being any of the above cases 1 to 4, in the case where the first uplink transmission includes the dynamically scheduled uplink channel or signal, the network device always receives the first uplink transmission.

With respect to the case where the first uplink transmission includes the preconfigured uplink channel or signal (such as the CG-PUSCH or the PUSCH carrying SP-CSI) and the PUCCH carrying HARQ-ACK information that are overlapped in the time domain, the network device receives the first uplink transmission on the first target time-domain resource, which includes one of: receiving the PUCCH carrying HARQ-ACK information; or receiving the preconfigured PUSCH carrying the HARQ-ACK information.

In some embodiments, in the case where the first uplink transmission includes the preconfigured PUSCH and the PUCCH carrying HARQ-ACK information that are overlapped in the time domain, the terminal device transmits the PUCCH carrying HARQ-ACK information; correspondingly, the network device receives the PUCCH carrying HARQ-ACK information.

In some embodiments, in the case where the first uplink transmission includes the preconfigured PUSCH and the PUCCH carrying HARQ-ACK information that are overlapped in the time domain, the terminal device transmits the preconfigured PUSCH carrying the HARQ-ACK information; correspondingly, the network device receives the preconfigured PUSCH carrying the HARQ-ACK information.

In some embodiments, in the case where it is determined based on the first configuration information that the HARQ-ACK information and the preconfigured PUSCH are not multiplexed, the PUCCH carrying the HARQ-ACK information is transmitted; correspondingly, the network device receives the PUCCH carrying the HARQ-ACK information.

In some embodiments, in the case where it is determined based on the first configuration information that the HARQ-ACK information and the preconfigured PUSCH are multiplexed, the preconfigured PUSCH carrying the HARQ-ACK information is transmitted; correspondingly, the network device receives the preconfigured PUSCH carrying the HARQ-ACK information.

In some embodiments, in the case where the non-active period of the cell DRX is determined via the DCI format, or in the case where it is determined, based on second configuration information, to activate or deactivate the cell DRX using the DCI format, the PUCCH carrying HARQ-ACK information is transmitted; correspondingly, the network device receives the PUCCH carrying HARQ-ACK information.

In some embodiments, in the case where the non-active period of cell DRX is determined via the DCI format, or in the case where it is determined, based on the second configuration information, to activate or deactivate the cell DRX using the DCI format, the preconfigured PUSCH carrying the HARQ-ACK information is transmitted; correspondingly, the network device receives the preconfigured PUSCH carrying the HARQ-ACK information.

In some embodiments, in the case where the non-active period of cell DRX is determined via the RRC signaling, or in the case where it is determined, based on the third configuration information, to configure the cell DRX using the RRC signaling, the PUCCH carrying HARQ-ACK information is transmitted; correspondingly, the network device receives the PUCCH carrying HARQ-ACK information.

In some embodiments, in the case where the non-active period of the cell DRX is determined via the RRC signaling, or in the case where it is determined, based on the third configuration information, to configure the cell DRX using the RRC signaling, the preconfigured PUSCH carrying the HARQ-ACK information is transmitted; correspondingly, the network device receives the preconfigured PUSCH carrying the HARQ-ACK information.

In some embodiments, in the case where the preconfigured PUSCH and the PUCCH carrying HARQ-ACK information are overlapped on the third time-domain resource, the network device receives the PUCCH carrying HARQ-ACK information, including: in the case where the third time-domain resource is partially or fully overlapped with the second time-domain resource, the network device receives the PUCCH carrying HARQ-ACK information on the third time-domain resource; or, in the case where the third time-domain resource and the second time-domain resource are non-overlapped, the network device receives the PUCCH carrying HARQ-ACK information on the third time-domain resource. The first target time-domain resource includes the third time-domain resource.

In some embodiments, in the case where the first uplink transmission includes the preconfigured PUSCH and the PUCCH carrying HARQ-ACK information, the network device receives the PUCCH carrying HARQ-ACK information and refrains from receiving the preconfigured PUSCH.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on the third time-domain resource, and the third time-domain resource is partially or fully overlapped with the second time-domain resource, the network device receives the PUCCH carrying HARQ-ACK information on the third time-domain resource, and/or the network device refrains from receiving the preconfigured PUSCH. The network device not receiving the preconfigured PUSCH may mean that the network device refrains from receiving the preconfigured PUSCH on the third time-domain resource, or refrains from receiving the preconfigured PUSCH on the second time-domain resource, or refrains from receiving the preconfigured PUSCH on the first time-domain resource.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on the third time-domain resource, and the third time-domain resource and the second time-domain resource are non-overlapped, the network device receives the PUCCH carrying HARQ-ACK information on the third time-domain resource, and/or the network device refrains from receiving the preconfigured PUSCH. That is, in this case, as long as the PUCCH carrying HARQ-ACK information and the preconfigured PUSCH are overlapped in the time domain, the network device refrains from receiving the preconfigured PUSCH. The network device not receiving the preconfigured PUSCH may mean that the network device refrains from receiving the preconfigured PUSCH on the third time-domain resource, or refrains from receiving the preconfigured PUSCH on the second time-domain resource, or refrains from receiving the preconfigured PUSCH on the first time-domain resource.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on the third time-domain resource, and the third time-domain resource and the second time-domain resource are non-overlapped, the network device receives the preconfigured PUSCH carrying the HARQ-ACK information on the third time-domain resource, and/or the network device refrains from receiving the preconfigured PUSCH on the second time-domain resource. That is, in this case, in the case where the preconfigured PUSCH and the PUCCH carrying HARQ-ACK information are not overlapped on the time-domain resource of the non-active period of the cell DRX, the terminal device still multiplexes the HARQ-ACK information onto the preconfigured PUSCH for transmission, and correspondingly, the network device receives the preconfigured PUSCH carrying the HARQ-ACK information.

In some embodiments, in the case where the preconfigured PUSCH and the PUCCH carrying HARQ-ACK information are overlapped on the third time-domain resource, the network device receives the preconfigured PUSCH carrying the HARQ-ACK information, including: in the case where the third time-domain resource is partially or fully overlapped with the second time-domain resource, the network device receives the preconfigured PUSCH carrying the HARQ-ACK information on the third time-domain resource; or, in the case where the third time-domain resource and the second time-domain resource are non-overlapped, the network device receives the preconfigured PUSCH the carrying HARQ-ACK information on the third time-domain resource. The first target time-domain resource includes the third time-domain resource.

In some embodiments, in the case where the first uplink transmission includes the preconfigured PUSCH and the PUCCH carrying HARQ-ACK information, the network device receives the preconfigured PUSCH carrying the HARQ-ACK information.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on the third time-domain resource, and the third time-domain resource is partially or fully overlapped with the second time-domain resource, the network device receives the preconfigured PUSCH carrying the HARQ-ACK information on the third time-domain resource, and/or the network device refrains from receiving the preconfigured PUSCH on the time-domain resource other than the third time-domain resource in the second time-domain resource.

In some embodiments, in the case where the first uplink transmission includes the preconfigured PUSCH and the PUCCH carrying HARQ-ACK information, in the case where the preconfigured PUSCH and the PUCCH carrying HARQ-ACK information are overlapped on the third time-domain resource, and the third time-domain resource and the second time-domain resource are non-overlapped, the network device receives the preconfigured PUSCH carrying the HARQ-ACK information on the third time-domain resource, and/or the network device refrains from receiving the preconfigured PUSCH on the second time-domain resource.

In some embodiments, in the case where the first uplink transmission includes the preconfigured PUSCH and the PUCCH carrying HARQ-ACK information, the behavior of the terminal device is determined based on the first configuration information transmitted by the network device. In some embodiments, the first configuration information is used to configure whether the HARQ-ACK information and the preconfigured PUSCH are multiplexed during the non-active period of the cell DRX. In some embodiments, in the case where it is determined based on the first configuration information that the HARQ-ACK information and the preconfigured PUSCH are not multiplexed, the terminal device transmits the PUCCH carrying HARQ-ACK information and refrains from transmitting the preconfigured PUSCH; correspondingly, the network device receives the PUCCH carrying HARQ-ACK information and refrains from receiving the preconfigured PUSCH. In some embodiments, in the case where it is determined based on the first configuration information that the HARQ-ACK information and the preconfigured PUSCH are multiplexed, the terminal device transmits the preconfigured PUSCH carrying the HARQ-ACK information; correspondingly, the network device receives the preconfigured PUSCH carrying the HARQ-ACK information.

In some embodiments, in the case where the first uplink transmission includes the preconfigured PUSCH and the PUCCH carrying HARQ-ACK information (in the case where the PUCCH carrying HARQ-ACK information collides with the preconfigured PUSCH to be transmitted by the terminal device within the time-domain resource of the non-active period of the cell DRX), if the non-active period of the cell DRX is determined via the RRC signaling (or it is determined, based on the third configuration information, to configure the cell DRX using the RRC signaling), the network device receives the PUCCH carrying HARQ-ACK information and refrains from receiving the preconfigured PUSCH; and/or, if the non-active period of the cell DRX is determined via the first DCI format (or it is determined, based on the second configuration information, to activate or deactivate the cell DRX using the DCI format), the network device receives the preconfigured PUSCH carrying the HARQ-ACK information.

In some embodiments, in the case where the terminal device is configured to activate or deactivate cell DRX via the DCI format, if the first uplink transmission includes the preconfigured PUSCH and the PUCCH carrying HARQ-ACK information, the terminal device transmits the PUCCH carrying HARQ-ACK information and refrains from transmitting the preconfigured PUSCH; correspondingly, the network device receives the PUCCH carrying HARQ-ACK information and refrains from receiving the preconfigured PUSCH.

In some embodiments, in the case where the network device configures the terminal device to activate or deactivate the cell DRX via the DCI format, in the case where the preconfigured PUSCH and the PUCCH carrying HARQ-ACK information are overlapped in the time domain, the network device always disregards the multiplexing of the preconfigured PUSCH and the PUCCH carrying HARQ-ACK information, meaning the network device always receives the PUCCH carrying HARQ-ACK information.

In some embodiments, in the case where the cell DRX is configured by the network device via the RRC signaling, in the case where the preconfigured PUSCH and the PUCCH carrying HARQ-ACK information are overlapped in the time domain during the non-active period of the cell DRX, the network device does not consider the multiplexing of the preconfigured PUSCH and the PUCCH carrying HARQ-ACK information, that is, the network device receives the PUCCH carrying HARQ-ACK information during the non-active period of the cell DRX.

As explained in the previous embodiment, the aforementioned behavior of the terminal device to transmit or refrain from transmitting the first uplink transmission is also affected by the first condition and/or the second condition. Correspondingly, the network device can decide to receive or refrain from receiving the first uplink transmission based on the first condition and/or the second condition.

In some embodiments, the network device receives the first uplink transmission on the first target time-domain resource, including: in the case where the first condition is met, the network device receives the first uplink transmission on the first target time-domain resource; and/or, in the case where the first condition is not met, the network device refrains from receiving the first uplink transmission on the first target time-domain resource.

In some embodiments, in the case where the non-active period of the cell DRX is determined via the first DCI format, if the first condition is met, the network device receives the first uplink transmission on the first target time-domain resource; and/or, if the first condition is not met, the network device refrains from receiving the first uplink transmission on the first target time-domain resource, wherein the first target time-domain resource does not belong to the non-active period of the cell DRX.

In some embodiments, the first condition includes the condition related to the first processing time length.

In some embodiments, the first condition includes: the duration of the interval between the first time-domain position and the start position of the first target time-domain resource is greater than or equal to the first processing time length; or, the duration of the interval between the first time-domain position and the start position of the first time-domain resource is greater than or equal to the first processing time length.

In some embodiments, the first time-domain position includes one of the following cases:
the terminal device receives the last symbol of the PDCCH reception carrying the first DCI format;
the terminal device receives the end position of the slot where the last symbol of the PDCCH reception carrying the first DCI format is located;
the terminal device is configured to receive the last symbol of the PDCCH reception used for transmitting the first DCI format;
the terminal device is configured to receive the end position of the slot where the last symbol of the PDCCH reception used for transmitting the first DCI format is located;
the effective time for activating the cell DRX is determined based on the first DCI format;
the effective time for deactivating the cell DRX is determined based on the first DCI format; or
the effective time of the first DCI format;
wherein the first DCI format is used to indicate the activation or deactivation of the cell DRX, and/or the first DCI format is used to indicate that the cell enters the network energy-saving mode.

In some embodiments, the network device refrains from receiving the first uplink transmission on the second target time-domain resource, including: in the case where the second condition is met, the network device refrains from receiving the first uplink transmission on the second target time-domain resource; and/or, in the case where the second condition is not met, the network device receives the first uplink transmission on the second target time-domain resource.

In some embodiments, in the case where the non-active period of the cell DRX is determined via the first DCI format, if the second condition is met, the network device refrains from receiving the first uplink transmission on the second target time-domain resource; and/or, if the second condition is not met, the network device receives the first uplink transmission on the second target time-domain resource within the first time-domain resource, wherein at least part of the second target time-domain resource belongs to the non-active period of the cell DRX.

In some embodiments, the second condition includes the condition related to the second processing time length.

In some embodiments, the second condition includes: the duration of the interval between the second time-domain position and the start position of the second target time-domain resource is greater than or equal to the second processing time length; or, the duration of the interval between the second time-domain position and the start position of the first time-domain resource is greater than or equal to the second processing time length.

In some embodiments, the second time-domain position includes one of the following cases:
the terminal device receives the last symbol of the PDCCH reception carrying the first DCI format;
the terminal device receives the end position of the slot where the last symbol of the PDCCH reception carrying the first DCI format is located;
the terminal device is configured to receive the last symbol of the PDCCH reception used for transmitting the first DCI format;
the terminal device is configured to receive the end position of the slot where the last symbol of the PDCCH reception used for transmitting the first DCI format is located;
the effective time for activating the cell DRX is determined based on the first DCI format;
the effective time for deactivating the cell DRX is determined based on the first DCI format; or
the effective time of the first DCI format;
wherein the first DCI format is used to indicate the activation or deactivation of the cell DRX, and/or the first DCI format is used to indicate that the cell enters the network energy-saving mode.

The technical solution according to the embodiments of present disclosure presents the solution for handling the uplink transmission in the case where the terminal device is configured with the cell DRX. If the time-domain resource occupied by the uplink transmission of the terminal device is partially or fully overlapped with the time-domain resource occupied by the non-active period of the cell DRX, the network device may receive the uplink transmission on the certain time-domain resource and/or refrain from receiving the uplink transmission on the certain time-domain resource, ensuring that the network device and the terminal device have a consistent understanding of the uplink channel or signal to be transmitted, thereby enhancing the reliability of uplink transmission.

In addition, for details not elaborated in the method embodiments of the network device, please refer to the descriptions in the method embodiments of the terminal device.

It should be noted that in some cases, the DCI format 2_9 can further be used to indicate to the terminal device that at least one of its serving cells (such as the primary cell) enters the network energy-saving mode. Subsequent to receiving this indication, the terminal device can initiate a conditional handover to switch the primary cell to another cell. However, there is currently no clear solution on how to indicate to the terminal device's serving cell to enter the network energy-saving mode via the DCI format 2_9.

The embodiments of the present disclosure also provide a method for indicating a cell to enter the network energy-saving mode. This method can be performed by the terminal device and the network device. The method may include at least one of the following processes.
In process A, the network device transmits the first DCI format;
In process B, the terminal device receives the first DCI format, wherein the first DCI format includes first indication information, wherein the first indication information is used to indicate whether the first cell enters the network energy-saving mode;
In process C, the terminal device initiates a conditional handover (CHO) based on the first indication information.

In some embodiments, the network device transmits configuration information to the terminal device, wherein the configuration information is used to determine one or more pieces of the following information: whether the first DCI format includes the first indication information, the position of the first indication information in the first DCI format, and the association relationship between the first indication information and a first cell.

In some embodiments, the first cell includes the primary cell or the primary secondary cell of the terminal device.

In some embodiments, the first DCI format includes the DCI format 2_9.

In some embodiments, the first indication information includes one bit.

In some embodiments, the first indication information indicates 1, indicating that the first cell enters the network energy-saving mode; alternatively, the first indication information indicates 0, indicating that the first cell has not entered the network energy-saving mode.

In some embodiments, the first indication information indicates 0, indicating that the first cell enters the network energy-saving mode; alternatively, the first indication information indicates 1, indicating that the first cell has not entered the network energy-saving mode.

In some embodiments, the first indication information indicates the first cell to enter the network energy-saving mode, including: the first indication information indicates the first cell to prepare for entering the network energy-saving mode.

In some embodiments, the first cell enters the network energy-saving mode, including one of the following cases: the first cell is switched off, at least part of the downlink resource in the first cell is not used for downlink transmission, or at least part of the uplink resource in the first cell is not used for uplink transmission.

In some embodiments, the first cell does not enter the network energy-saving mode, including one of the following cases: the first cell operates normally, at least part of the downlink resource in the first cell is used for downlink transmission, or at least part of the uplink resource in the first cell is used for uplink transmission.

In some embodiments, the first DCI format further includes second indication information, wherein the second indication information is used to indicate the activation or deactivation of the cell DTX and/or the cell DRX on the first cell.

In some embodiments, in the case where the first DCI format includes the first indication information and the second indication information, when the first indication information indicates that the first cell enters the network energy-saving mode, the second indication information is used to indicate the activation or the deactivation of the cell DTX and/or the cell DRX on the first cell.

In some embodiments, in the case where the first DCI format includes the first indication information and the second indication information, when the first indication information indicates that the first cell has not entered the network energy-saving mode, the second indication information is used to indicate the activation or the deactivation of the cell DTX and/or the cell DRX on the first cell.

In some embodiments, if the terminal device receives the first DCI carrying the first indication information, wherein the first indication information in the first DCI indicates that the first cell enters the network energy-saving mode, then the terminal device does not expect to receive the second DCI after the first DCI, wherein the first indication information in the second DCI indicates that the first cell has not entered the network energy-saving mode. It can be understood that both the first DCI and the second DCI correspond to the first DCI format.

In some embodiments, if the terminal device receives the first DCI carrying the first indication information, wherein the first indication information in the first DCI indicates that the first cell enters the network energy-saving mode, then the terminal device does not expect to receive the second DCI within a first time length after the first DCI, wherein the first indication information in the second DCI indicates that the first cell has not entered the network energy-saving mode.

In some embodiments, the first time length is preconfigured or pre-defined.

In some embodiments, the first time length is associated with the time required for the terminal device to complete the handover process. For example, the first time length is determined based on the time required for the terminal device to complete the handover process.

In some embodiments, if the terminal device receives the first DCI carrying the first indication information, wherein the first indication information in the first DCI indicates that the first cell enters the network energy-saving mode, then before reconfiguration, the terminal device does not expect to receive the second DCI after the first DCI, wherein the first indication information in the second DCI indicates that the first cell has not entered the network energy-saving mode.

In some embodiments, the reconfiguration includes at least one of: system information reconfiguration, reconfiguration of a configuration message related to the first DCI format, or reconfiguration of a configuration message related to the first indication information.

In some embodiments, in the case where the first indication information in the first DCI format indicates that the first cell enters the network energy-saving mode, the terminal device determines, based on the first indication information, that the first cell enters the network energy-saving mode starting from the first time unit.

In some embodiments, the first time unit is determined based on the time unit in which the first DCI format carrying the first indication information is received. For example, the first time unit is the first slot of the cycle of the cell DTX where the slot of the first DCI format carrying the first indication information is received, or the first time unit is the first slot of the cycle of the cell DRX where the slot of the first DCI format carrying the first indication information is received.

In some embodiments, the first time unit is determined based on the first time length. For example, the first time unit is the first time unit after the slot in which the first DCI format carrying the first indication information is received has elapsed for the first time length.

In some embodiments, the first time unit is determined based on a second time length, wherein the second time length is preconfigured or pre-defined. For example, the first time unit is the first time unit after the slot in which the first DCI format carrying the first indication information is received has elapsed for the second time length.

In some embodiments, the first time unit is determined based on a third time length, wherein the third time length is a value d determined based on Table 1. For example, the first time unit is the first time unit after the slot in which the first DCI format carrying the first indication information is received has elapsed for the third time length.

In some embodiments, the unit of the time unit includes one of: a slot, a subframe, a half-frame, a frame, a millisecond, a second, a length of the first DCI format listening period, a length of the period of the cell DTX of the first cell, or a length of the period of the cell DRX of the first cell.

In some embodiments, the unit of the first time length includes one of: a slot, a subframe, a half-frame, a frame, a millisecond, a second, a length of the first DCI format listening period, a length of the period of the cell DTX of the first cell, or a length of the period of the cell DRX of the first cell.

In some embodiments, the unit of the second time length includes one of: a slot, a subframe, a half-frame, a frame, a millisecond, a second, a length of the first DCI format listening period, a length of the period of the cell DTX of the first cell, and a length of the period of the cell DRX of the first cell.

In some embodiments, the unit of the third time length is a slot.

In some embodiments, the first cell enters the network energy-saving mode, including: the first cell is switched off.

In some embodiments, in the case where the first indication information indicates that the first cell is switched off, no resource is present on the first cell for transmitting a common channel or signal; and/or, no resource is present on the first cell for transmitting a terminal device-specific channel or signal .

In some embodiments, in the case where the first indication information indicates that the first cell is switched off, no resource is present on the first cell for transmitting a downlink common channel or signal; and/or, no resource is present on the first cell for transmitting a terminal device-specific downlink channel or signal.

In some embodiments, in the case where the first indication information indicates that the first cell is switched off, no resource is present on the first cell for transmitting an uplink common channel or signal; and/or, no resource is present on the first cell for transmitting a terminal device-specific uplink channel or signal.

In some embodiments, the terminal device initiates the conditional handover based on the first indication information, including: in the case where the first indication information indicates that the first cell enters the network energy-saving mode, the terminal device initiates the conditional handover based on the first indication information.

In some embodiments, the terminal device initiates the conditional handover based on the first indication information, including: the terminal device initiates a conditional handover once the second time duration has elapsed.

The followings are apparatus embodiments of the present disclosure, which can be used to implement the method embodiments of the present disclosure. For details not disclosed in the apparatus embodiments of the present disclosure, please refer to the method embodiments of the present disclosure.

Please refer to FIG. 12, FIG. 12 illustrates a block diagram of a terminal device according to an embodiment of the present disclosure. The first uplink transmission of the terminal device occupies the first time-domain resource, and the second time-domain resource is the overlapping part between the first time-domain resource and the time-domain resource of the non-active period of the cell DRX. The first time-domain resource includes the first target time-domain resource and/or the second target time-domain resource. As illustrated in FIG. 12, the terminal device 1200 may include: a transmitting module 1210.

The transmitting module 1210 is configured to transmit the first uplink transmission on the first target time-domain resource, and/or refrain from transmitting the first uplink transmission on the second target time-domain resource.

In some embodiments, the first uplink transmission includes the preconfigured uplink channel or signal. The transmitting module 1210 is configured to refrain from transmitting the first uplink transmission on the second time-domain resource, wherein the second target time-domain resource includes the second time-domain resource.

In some embodiments, the transmitting module 1210 is further configured to refrain from transmitting the first uplink transmission on the first time-domain resource, wherein the second target time-domain resource includes the first time-domain resource; or, transmit the first uplink transmission on the time-domain resource other than the second time-domain resource in the first time-domain resource, wherein the first target time-domain resource includes the time-domain resource other than the second time-domain resource in the first time-domain resource; or, transmit the first uplink transmission on the time-domain resource that precedes the second time-domain resource in the first time-domain resource, and refrain from transmitting the first uplink transmission on the time-domain resource that follows the second time-domain resource in the first time-domain resource, wherein the first target time-domain resource includes the time-domain resource that precedes the second time-domain resource in the first time-domain resource, and the second target time-domain resource includes the time-domain resource that follows the second time-domain resource in the first time-domain resource; or refrain from transmitting the first uplink transmission on the time-domain resources that precedes the second time-domain resource in the first time-domain resource, and transmit the first uplink transmission on the time-domain resources that follows the second time-domain resource in the first time-domain resource, wherein the first target time-domain resource includes the time-domain resource that follows the second time-domain resource in the first time-domain resource, and the second target time-domain resource includes the time-domain resources that precedes the second time-domain resource in the first time-domain resource.

In some embodiments, the first uplink transmission includes the preconfigured uplink channel or signal. The transmitting module 1210 is configured to transmit the first uplink transmission on the first time-domain resource in the case where the second time-domain resource is absent, wherein the first target time-domain resource includes the first time-domain resource.

In some embodiments, the preconfigured uplink channel or signal includes one or more of: the CG-PUSCH, the SRS configured by RRC, the SRS activated by MAC CE, the SR, the PUCCH not carrying HARQ-ACK information, and the PUSCH carrying SP-CSI.

In some embodiments, the first uplink transmission includes one or more preconfigured uplink channels or signals. In the case where the first uplink transmission includes the plurality of preconfigured uplink channels or signals, the plurality of preconfigured uplink channels or signals are transmitted repeatedly or not transmitted repeatedly.

In some embodiments, the first uplink transmission includes the dynamically scheduled uplink channel or signal. The transmitting module 1210 is configured to transmit the first uplink transmission on the first time-domain resource. The first target time-domain resource includes the first time-domain resource; the dynamically scheduled uplink channel or signal includes one or more of: the PUSCH scheduled by DCI, the SRS triggered by DCI, and the PUCCH carrying HARQ-ACK information.

In some embodiments, the first uplink transmission includes the preconfigured PUSCH and the PUCCH carrying HARQ-ACK information that are overlapped in the time domain; the transmitting module 1210 is configured to perform one of the following:
transmitting the PUCCH carrying HARQ-ACK information;
transmitting the preconfigured PUSCH carrying the HARQ-ACK information;
transmitting the PUCCH carrying the HARQ-ACK information in the case where it is determined based on the first configuration information that the HARQ-ACK information and the preconfigured PUSCH are not multiplexed;
transmitting the preconfigured PUSCH in the case where it is determined based on the first configuration information that the HARQ-ACK information and preconfigured PUSCH are multiplexed, wherein the preconfigured PUSCH carries the HARQ-ACK information;
transmitting the PUCCH carrying HARQ-ACK information in the case where the non-active period of the cell DRX is determined via the DCI format, or in the case where it is determined, based on the second configuration information, to activate or deactivate the cell DRX using the DCI format;
transmitting the preconfigured PUSCH in the case where the non-active period of the cell DRX is determined via the DCI format, or in the case where it is determined, based on the second configuration information, to activate or deactivate the cell DRX using the DCI format, wherein the preconfigured PUSCH carries the HARQ-ACK information;
transmitting the PUCCH carrying HARQ-ACK information in the case where the non-active period of the cell DRX is determined via the RRC signaling, or in the case where it is determined, based on the third configuration information, to configure the cell DRX using the RRC signaling; or
transmitting the preconfigured PUSCH in the case where the non-active period of the cell DRX is determined via the RRC signaling, or in the case where it is determined, based on the third configuration information, to configure the cell DRX using the RRC signaling, wherein the preconfigured PUSCH carries the HARQ-ACK information.

In some embodiments, in the case where the preconfigured PUSCH and the PUCCH carrying HARQ-ACK information are overlapped on the third time-domain resource, the transmitting module 1210 is configured to: transmit the PUCCH carrying HARQ-ACK information on the third time-domain resource in the case where the third time-domain resource is partially or fully overlapped with the second time-domain resource; or transmit the PUCCH carrying HARQ-ACK information on the third time-domain resource in the case where the third time-domain resource and the second time-domain resource are completely non-overlapped; wherein the first target time-domain resource includes the third time-domain resource.

In some embodiments, the transmitting module 1210 is further configured to: refrain from transmitting the preconfigured PUSCH on the third time-domain resource; or refrain from transmitting the preconfigured PUSCH on the second time-domain resource; or refrain from transmitting the preconfigured PUSCH on the first time-domain resource.

In some embodiments, in the case where the preconfigured PUSCH and the PUCCH carrying HARQ-ACK information are overlapped on the third time-domain resource, the transmitting module 1210 is configured to: transmit the preconfigured PUSCH carrying the HARQ-ACK information on the third time-domain resource in the case where the third time-domain resource is partially or fully overlapped with the second time-domain resource; or transmit the preconfigured PUSCH carrying the HARQ-ACK information on the third time-domain resource in the case where the third time-domain resource and the second time-domain resource are completely non-overlapped; wherein the first target time-domain resource includes the third time-domain resource.

In some embodiments, the transmitting module 1210 is further configured to: refrain from transmitting the preconfigured PUSCH on the time-domain resource other than the third time-domain resource in the second time-domain resource; or, in the case where the third time-domain resource and the second time-domain resource are completely non-overlapped, refrain from transmitting the preconfigured PUSCH on the second time-domain resource.

In some embodiments, the transmitting module 1210 is configured to: transmit the first uplink transmission on the first target time-domain resource in the case where the first condition is met; and/or, refrain from transmitting the first uplink transmission on the first target time-domain resource in the case where the first condition is not met.

In some embodiments, the first condition includes the condition related to the first processing time length.

In some embodiments, the first condition includes:
the duration of the interval between the first time-domain position and the start position of the first target time-domain resource is greater than or equal to the first processing time length; or
the duration of the interval between the first time-domain position and the start position of the first time-domain resource is greater than or equal to the first processing time length;
wherein the first time-domain position includes one of the following cases:
   the terminal device receives the last symbol of the PDCCH reception carrying the first DCI format;
   the terminal device receives the end position of the slot where the last symbol of the PDCCH reception carrying the first DCI format is located;
   the terminal device is configured to receive the last symbol of the PDCCH reception used for transmitting the first DCI format;
   the terminal device is configured to receive the end position of the slot where the last symbol of the PDCCH reception used for transmitting the first DCI format is located;
   the effective time for activating the cell DRX is determined based on the first DCI format;
   the effective time for deactivating the cell DRX is determined based on the first DCI format; or
   the effective time of the first DCI format;
   wherein the first DCI format is used to indicate the activation or deactivation of cell DRX, and/or the first DCI format is used to indicate that the cell enters the network energy-saving mode.

In some embodiments, the transmitting module 1210 is configured to: refrain from transmitting the first uplink transmission on the second target time-domain resource in the case where the second condition is met; and/or transmit the first uplink transmission on the second target time-domain resource in the case where the second condition is not met.

In some embodiments, the second condition includes a condition related to the second processing time length.

In some embodiments, the second condition includes:
the duration of the interval between the second time-domain position and the start position of the second target time-domain resource is greater than or equal to the second processing time length; or
the duration of the interval between the second time-domain position and the start position of the first time-domain resource is greater than or equal to the second processing time length;
wherein the second time-domain position includes one of the following cases:
   the terminal device receives the last symbol of the PDCCH reception carrying the first DCI format;
   the terminal device receives the end position of the slot where the last symbol of the PDCCH reception carrying the first DCI format is located;
   the terminal device is configured to receive the last symbol of the PDCCH reception used for transmitting the first DCI format;
   the terminal device is configured to receive the end position of the slot where the last symbol of the PDCCH reception used for transmitting the first DCI format is located;
   the effective time for activating the cell DRX is determined based on the first DCI format;
   the effective time for deactivating the cell DRX is determined based on the first DCI format; or
   the effective time of the first DCI format;
   wherein the first DCI format is used to indicate the activation or deactivation of the cell DRX, and/or the first DCI format is used to indicate that the cell enters the network energy-saving mode.

In some embodiments, the non-active period of the cell DRX is determined via the first DCI format.

In some embodiments, the start position of the first time-domain resource is within the active period of the cell DRX, and the end position of the first time-domain resource is the same as the end position of the second time-domain resource; alternatively, the start position of the first time-domain resource is within the active period of the cell DRX, and the end position of the first time-domain resource is also within the active period of the cell DRX; alternatively, the start position of the first time-domain resource is the same as the start position of the second time-domain resource, and the end position of the first time-domain resource is the same as the end position of the second time-domain resource; alternatively, the start position of the first time-domain resource is the same as the start position of the second time-domain resource, and the end position of the first time-domain resource is within the active period of the cell DRX.

Please refer to FIG. 13, FIG. 13 illustrates a block diagram of a network device according to an embodiment of the present disclosure. The first uplink transmission of the terminal device occupies the first time-domain resource, and the second time-domain resource is the overlapping part between the first time-domain resource and the time-domain resource of the non-active period of the cell DRX configured by the network device. The first time-domain resource includes the first target time-domain resource and/or the second target time-domain resource. As illustrated in FIG. 13, the network device 1300 may include: a receiving module 1310.

The receiving module 1310 is configured to receive the first uplink transmission on the first target time-domain resource, and/or refrain from receiving the first uplink transmission on the second target time-domain resource.

In some embodiments, the first uplink transmission includes the preconfigured uplink channel or signal. The receiving module 1310 is configured to refrain from receiving the first uplink transmission on the second time-domain resource, wherein the second target time-domain resource includes the second time-domain resource.

In some embodiments, the receiving module 1310 is further configured to: refrain from receiving the first uplink transmission on the first time-domain resource, wherein the second target time-domain resource includes the first time-domain resource; or receive the first uplink transmission on the time-domain resource other than the second time-domain resource in the first time-domain resource, wherein the first target time-domain resource includes the time-domain resource other than the second time-domain resource in the first time-domain resource; or receive the first uplink transmission on the time-domain resource that precedes the second time-domain resource in the first time-domain resource, and refrain from receiving the first uplink transmission on the time-domain resource that follows the second time-domain resource in the first time-domain resource, wherein the first target time-domain resource includes the time-domain resource that precedes the second time-domain resource in the first time-domain resource, and the second target time-domain resource includes the time-domain resource that follows the second time-domain resource in the first time-domain resource; or refrain from receiving the first uplink transmission on the time-domain resource that precedes the second time-domain resource in the first time-domain resource, and receive the first uplink transmission on the time-domain resource that follows the second time-domain resource in the first time-domain resource, wherein the first target time-domain resource includes the time-domain resource that follows the second time-domain resource in the first time-domain resource, and the second target time-domain resource includes the time-domain resource that precedes the second time-domain resource in the first time-domain resource.

In some embodiments, the first uplink transmission includes the preconfigured uplink channel or signal. The receiving module 1310 is configured to receive the first uplink transmission on the first time-domain resource in the case where the second time-domain resource is absent, wherein the first target time-domain resource includes the first time-domain resource.

In some embodiments, the preconfigured uplink channel or signal includes one or more of: the CG-PUSCH, the SRS configured by RRC, the SRS activated by MAC CE, the SR, the PUCCH not carrying HARQ-ACK information, and the PUSCH carrying SP-CSI.

In some embodiments, the first uplink transmission includes one or more preconfigured uplink channels or signals. In the case where the first uplink transmission includes a plurality of preconfigured uplink channels or signals, the plurality of preconfigured uplink channels or signals are transmitted repeatedly or not transmitted repeatedly.

In some embodiments, the first uplink transmission includes the dynamically scheduled uplink channel or signal. The receiving module 1310 is configured to receive the first uplink transmission on the first time-domain resource. The first target time-domain resource includes the first time-domain resource; the dynamically scheduled uplink channel or signal includes one or more of: the PUSCH scheduled by DCI, the SRS triggered by DCI, and the PUCCH carrying HARQ-ACK information.

In some embodiments, the first uplink transmission includes the CG-PUSCH and the PUCCH carrying HARQ-ACK information that are overlapped in the time domain; and the receiving module 1310 is configured to perform one of: receiving the PUCCH carrying HARQ-ACK information; or receiving the preconfigured PUSCH carrying the HARQ-ACK information.

In some embodiments, in the case where it is determined based on the first configuration information that the HARQ-ACK information and the preconfigured PUSCH are not multiplexed, the PUCCH carrying the HARQ-ACK information is transmitted; or
in the case where it is determined based on the first configuration information that the HARQ-ACK information and preconfigured PUSCH are multiplexed, the preconfigured PUSCH carrying the HARQ-ACK information is transmitted; or
in the case where the non-active period of the cell DRX is determined via the DCI format, or in the case where the DCI format is determined, based on the second configuration information, to be used to activate or deactivate the cell DRX, the PUCCH carrying HARQ-ACK information is transmitted; or
in the case where the non-active period of the cell DRX is determined via the DCI format, or in the case where the DCI format is determined, based on the second configuration information, to be used to activate or deactivate the cell DRX, the preconfigured PUSCH carrying the HARQ-ACK information is transmitted; or
in the case where the non-active period of the cell DRX is determined via the RRC signaling, or in the case where it is determined, based on the third configuration information, to configure the cell DRX using the RRC signaling, the PUCCH carrying HARQ-ACK information is transmitted; or
in the case where the non-active period of the cell DRX is determined via the RRC signaling, or in the case where it is determined, based on the third configuration information, to configure the cell DRX using the RRC signaling, the preconfigured PUSCH carrying the HARQ-ACK information is transmitted.

In some embodiments, in the case where the preconfigured PUSCH and the PUCCH carrying HARQ-ACK information are overlapped on the third time-domain resource, the receiving module 1310 is configured to: receive the PUCCH carrying HARQ-ACK information on the third time-domain resource in the case where the third time-domain resource is partially or fully overlapped with the second time-domain resource; or receive the PUCCH carrying HARQ-ACK information on the third time-domain resource in the case where the third time-domain resource and the second time-domain resource are completely non-overlapped; wherein the first target time-domain resource includes the third time-domain resource.

In some embodiments, the receiving module 1310 is further configured to: refrain from receiving the preconfigured PUSCH on the third time-domain resource; or refrain from receiving the preconfigured PUSCH on the second time-domain resource; or refrain from receiving the preconfigured PUSCH on the first time-domain resource.

In some embodiments, in the case where the preconfigured PUSCH and the PUCCH carrying HARQ-ACK information are overlapped on the third time-domain resource, the receiving module 1310 is configured to: receive the preconfigured PUSCH carrying the HARQ-ACK information on the third time-domain resource in the case where the third time-domain resource is partially or fully overlapped with the second time-domain resource; or receive the preconfigured PUSCH carrying the HARQ-ACK information on the third time-domain resource in the case where the third time-domain resource and the second time-domain resource are completely non-overlapped; wherein the first target time-domain resource includes the third time-domain resource.

In some embodiments, the receiving module 1310 is further configured to: refrain from receiving the preconfigured PUSCH on the time-domain resource other than the third time-domain resource in the second time-domain resource; or, in the case where the third time-domain resource and the second time-domain resource are completely non-overlapped, refrain from receiving the preconfigured PUSCH on the second time-domain resource.

In some embodiments, the receiving module 1310 is configured to: receive the first uplink transmission on the first target time-domain resource in the case where the first condition is met; and/or, refrain from receiving the first uplink transmission on the first target time-domain resource in the case where the first condition is not met.

In some embodiments, the first condition includes the condition related to the first processing time length.

In some embodiments, the first condition includes:
the duration of the interval between the first time-domain position and the start position of the first target time-domain resource is greater than or equal to the first processing time length; or
the duration of the interval between the first time-domain position and the start position of the first time-domain resource is greater than or equal to the first processing time length;
wherein the first time-domain position includes one of the following cases:
   the terminal device receives the last symbol of the PDCCH reception carrying the first DCI format;
   the terminal device receives the end position of the slot where the last symbol of the PDCCH reception carrying the first DCI format is located;
   the terminal device is configured to receive the last symbol of the PDCCH reception used for transmitting the first DCI format;
   the terminal device is configured to receive the end position of the slot where the last symbol of the PDCCH reception used for transmitting the first DCI format is located;
   the effective time for activating the cell DRX is determined based on the first DCI format;
   the effective time for deactivating the cell DRX is determined based on the first DCI format; or
   the effective time of the first DCI format;
   wherein the first DCI format is used to indicate the activation or deactivation of the cell DRX, and/or the first DCI format is used to indicate that the cell enters the network energy-saving mode.

In some embodiments, the receiving module 1310 is configured to: refrain from receiving the first uplink transmission on the second target time-domain resource in the case where the second condition is met; and/or, receive the first uplink transmission on the second target time-domain resource in the case where the second condition is not met.

In some embodiments, the second condition includes the condition related to the second processing time length.

In some embodiments, the second condition includes:
the duration of the interval between the second time-domain position and the start position of the second target time-domain resource is greater than or equal to the second processing time length; or
the duration of the interval between the second time-domain position and the start position of the first time-domain resource is greater than or equal to the second processing time length;
wherein the second time-domain position includes one of the following cases:
   the terminal device receives the last symbol of the PDCCH reception carrying the first DCI format;
   the terminal device receives the end position of the slot where the last symbol of the PDCCH reception carrying the first DCI format is located;
   the terminal device is configured to receive the last symbol of the PDCCH reception used for transmitting the first DCI format;
   the terminal device is configured to receive the end position of the slot where the last symbol of the PDCCH reception used for transmitting the first DCI format is located;
   the effective time for activating the cell DRX is determined based on the first DCI format;
   the effective time for deactivating the cell DRX is determined based on the first DCI format; or
   the effective time of the first DCI format;
   wherein the first DCI format is used to indicate the activation or deactivation of the cell DRX, and/or the first DCI format is used to indicate that the cell enters the network energy-saving mode.

In some embodiments, the non-active period of the cell DRX is determined via the first DCI format.

In some embodiments, the start position of the first time-domain resource is within the active period of the cell DRX, and the end position of the first time-domain resource is the same as the end position of the second time-domain resource; alternatively, the start position of the first time-domain resource is within the active period of the cell DRX, and the end position of the first time-domain resource is also within the active period of the cell DRX; alternatively, the start position of the first time-domain resource is the same as the start position of the second time-domain resource, and the end position of the first time-domain resource is the same as the end position of the second time-domain resource; alternatively, the start position of the first time-domain resource is the same as the start position of the second time-domain resource, and the end position of the first time-domain resource is within the active period of the cell DRX.

It should be noted that the apparatus according to the above embodiment is exemplified only based on the division of the various functional modules when achieving its functions. In practice, the above functions can be allocated to different functional modules based on actual needs, that is, the content structure of the apparatus can be divided into different functional modules to complete all or part of the functions described above.

Regarding the apparatus in the aforementioned embodiments, the specific ways in which each module performs operations have been described in detail in the embodiments related to the method, which will not be elaborated herein any further.

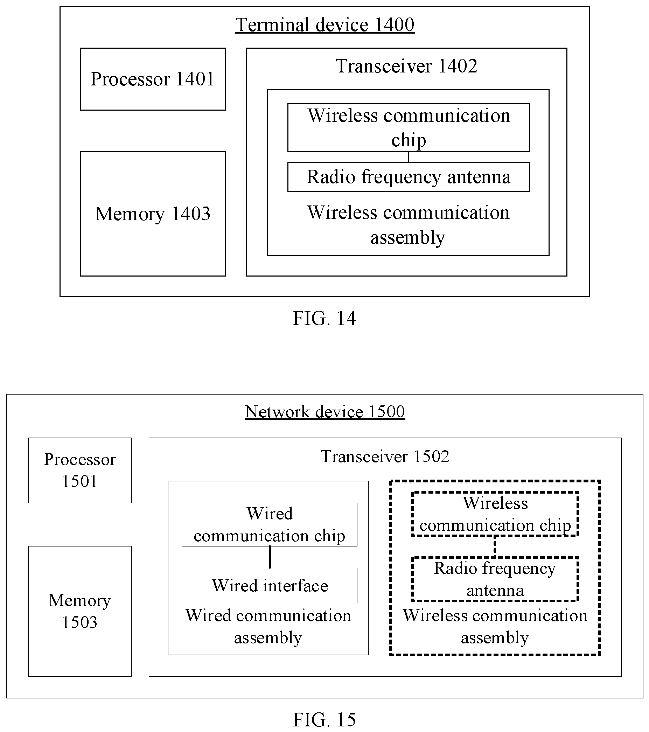

Please refer to FIG. 14, FIG. 14 illustrates the structural schematic diagram of a terminal device 1400 according to an embodiment of the present disclosure. This terminal device 1400 can be utilized to perform the method processes performed by the terminal device in the aforementioned embodiments. The terminal device 1400 may include: a processor 1401, a transceiver 1402, and a memory 1403. Specifically, the transceiver 1402 is utilized to implement transmitting or receiving functions, such as implementing the functions of the aforementioned transmitting module 1210. The processor 1401 can be utilized to implement other processing functions or to control transmission and/or reception.

The processor 1401 includes one or more processing cores, and the processor 1401 achieves various functional applications and information processing by running software programs and modules.

The transceiver 1402 includes a receiver and a transmitter. For example, the receiver and the transmitter may be implemented as the same wireless communication assembly. The wireless communication assembly includes a wireless communication chip and a radio frequency antenna.

The memory 1403 is connected to the processor 1401 and the transceiver 1402.

The memory 1403 is configured to store one or more computer programs run by a processor, and the processor 1401 is configured to run the one or more computer programs to perform various processes performed by the terminal device in the above method embodiments.

In addition, the memory 1403 is practiced by any type of volatile or non-volatile storage device or combinations thereof. The volatile or non-volatile storage device includes but is not limited to a magnetic disk or an optical disk, an electrically erasable programmable read-only memory, an erasable programmable read-only memory, a static random-access memory, a read-only memory, a magnetic memory, a flash memory, and a programmable read-only memory.

In some embodiments, the first uplink transmission of the terminal device occupies first time-domain resource, and the second time-domain resources are the overlapping part between the first time-domain resource and the time-domain resources of the non-active period of cell DRX. The first time-domain resource includes the first target time-domain resources and/or the second target time-domain resources. The transceiver 1402 is configured to transmit the first uplink transmission on the first target time-domain resources; and/or, not to transmit the first uplink transmission on the second target time-domain resources.

For details not disclosed in the present embodiment, please refer to the above embodiments, which are not elaborated herein any further herein.

Please refer to FIG. 15, FIG. 15 illustrates the structural schematic diagram of a network device 1500 according to an embodiment of the present disclosure. This network device 1500 can be utilized to perform the method processes performed by the network device in the aforementioned embodiments. The network device 1500 may include: a processor 1501, a transceiver 1502, and a memory 1503. Specifically, the transceiver 1502 is utilized to implement transmitting or receiving functions, such as implementing the functions of the aforementioned receiving module 1310. The processor 1501 can be utilized to implement other processing functions or to control transmission and/or reception.

The processor 1501 includes one or more processing cores, and the processor 1501 achieves various functional applications and information processing by running software programs and modules.

The transceiver 1502 includes a receiver and a transmitter. For example, the transceiver 1502 includes a wired communication assembly. The wired communication assembly includes a wired communication chip and a wired interface (such as a fiber optic interface). For example, the transceiver 1502 may include a wireless communication assembly. The wireless communication assembly includes a wireless communication chip and a radio frequency antenna.

The memory 1503 is connected to the processor 1501 and the transceiver 1502.

The memory 1503 is configured to store a computer program run by a processor, and the processor 1501 is configured to run the computer program to perform various processes performed by the network device in the above method embodiments.

In addition, the memory 1503 is practiced by any type of volatile or non-volatile storage device or combinations thereof. The volatile or non-volatile storage device includes but is not limited to a magnetic disk or an optical disk, an electrically erasable programmable read-only memory, an erasable programmable read-only memory, a static random-access memory, a read-only memory, a magnetic memory, a flash memory, and a programmable read-only memory.

In some embodiments, the first uplink transmission of the terminal device occupies the first time-domain resource, and the second time-domain resource is the overlapping part between the first time-domain resource and the time-domain resource of the non-active period of the cell DRX configured by the network device. The first time-domain resource includes the first target time-domain resource and/or the second target time-domain resource. The transceiver 1502 is configured to receive the first uplink transmission on the first target time-domain resource; and/or, not to receive the first uplink transmission on the second target time-domain resource.

For details not disclosed in the present embodiment, please refer to the above embodiments, which are not elaborated herein any further herein.

Some embodiments of the present disclosure further provide a computer-readable storage medium storing a computer program, wherein the computer program, when run by a processor of a terminal device, is used to perform the method for wireless communication of the terminal device as described above.

Some embodiments of the present disclosure further provide a computer-readable storage medium storing a computer program, wherein the computer program, when run by a processor of a network device, is used to perform the method for wireless communication of the network device as described above.

In some embodiments, the computer-readable storage medium includes a read-only memory (ROM), a random-access memory (RAM), a solid-state drive (SSD), or an optical disk. The RAM may include a resistance random access memory (ReRAM) and a dynamic random access memory (DRAM).

Some embodiments of the present disclosure further provide a chip. The chip includes a programmable logic circuit and/or one or more program instructions. The chip, when running on a terminal device, is configured to perform the method for wireless communication of the terminal device as described above.

Some embodiments of the present disclosure further provide a chip. The chip includes a programmable logic circuit and/or one or more program instructions. The chip, when running on a network device, is configured to perform the method for wireless communication of the network device as described above.

Some embodiments of the present disclosure further provide a computer program product or a computer program, wherein the computer program product or the computer program includes one or more computer programs. The one or more computer programs are stored in a computer-readable storage medium, wherein the one or more computer programs, when loaded and run by a processor of a terminal device, are used to perform the method for wireless communication of the terminal device as described above.

Some embodiments of the present disclosure further provide a computer program product or a computer program, wherein the computer program product or the computer program includes one or more computer programs. The one or more computer programs are stored in a computer-readable storage medium, wherein the one or more computer programs, when loaded and run by a processor of a network device, are used to perform the method for wireless communication of the network device as described above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items; and also indicates relationships such as indicating and being indicated, or configuring and being configured.

In some embodiments of the present disclosure, the term "predefined" is implemented by prestoring corresponding codes, tables, or other means that may be defined to indicate related information in devices (including, for example, the terminal device and the network device), and the present disclosure does not limit the specific implementation thereof. For example, "predefined" refers to "defined" in a protocol.

In some embodiments of the present disclosure, the "protocol" refers to a standard protocol in the communication field including, for example, an LTE protocol, an NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for wireless communication, performed by a terminal device, wherein a first uplink transmission of the terminal device occupies a first time-domain resource, and a second time-domain resource is an overlapping part between the first time-domain resource and a time-domain resource of a non-active period of cell discontinuous reception (DRX), wherein the first time-domain resource comprises a first target time-domain resource and/or a second target time-domain resource;
the method comprising:
transmitting the first uplink transmission on the first target time-domain resource; and/or
refraining from transmitting the first uplink transmission on the second target time-domain resource.

2. The method according to claim 1, wherein
the first uplink transmission comprises a preconfigured uplink channel or signal; and
refraining from transmitting the first uplink transmission on the second target time-domain resource comprises:
refraining from transmitting the first uplink transmission on the second time-domain resource, wherein the second target time-domain resource comprises the second time-domain resource.

3. The method according to claim 2, further comprising:
refraining from transmitting the first uplink transmission on the first time-domain resource, wherein the second target time-domain resource comprises the first time-domain resource; or
transmitting the first uplink transmission on a time-domain resource other than the second time-domain resource within the first time-domain resource, wherein the first target time-domain resource comprises the time-domain resource other than the second time-domain resource within the first time-domain resource; or
transmitting the first uplink transmission on a time-domain resource that precedes the second time-domain resource in the first time-domain resource, and refraining from transmitting the first uplink transmission on a time-domain resource that follows the second time-domain resource in the first time-domain resource, wherein the first target time-domain resource comprises the time-domain resource that precedes the second time-domain resource in the first time-domain resource, and the second target time-domain resource comprises the time-domain resource that follows the second time-domain resource in the first time-domain resource; or
refraining from transmitting the first uplink transmission on a time-domain resource that precedes the second time-domain resource in the first time-domain resource, and transmitting the first uplink transmission on a time-domain resource that follows the second time-domain resource in the first time-domain resource, wherein the first target time-domain resource comprises the time-domain resource that follows the second time-domain resource in the first time-domain resource, and the second target time-domain resource comprises the time-domain resource that precedes the second time-domain resource in the first time-domain resource.

4. The method according to claim 1, wherein
the first uplink transmission comprises a preconfigured uplink channel or signal; and
transmitting the first uplink transmission on the first target time-domain resource comprises:
transmitting the first uplink transmission on the first time-domain resource in a case where the second time-domain resource is absent, wherein the first target time-domain resource comprises the first time-domain resource.

5. The method according to any one of claims 2 to 4, wherein the preconfigured uplink channel or signal comprises one or more of: a configured grant physical uplink shared channel (CG-PUSCH), a sounding reference signal (SRS) configured by radio resource control (RRC), an SRS activated by a medium access control (MAC) control element (CE), a scheduling request (SR), a physical uplink control channel (PUCCH) not carrying hybrid automatic repeat-request acknowledgement (HARQ-ACK) information, and a physical uplink shared channel (PUSCH) carrying semi-persistent channel state information (SP-CSI).

6. The method according to any one of claims 2 to 5, wherein
the first uplink transmission comprises one or more preconfigured uplink channels or signals; and
in a case where the first uplink transmission comprises a plurality of preconfigured uplink channels or signals, the plurality of preconfigured uplink channels or signals are transmitted repeatedly or not transmitted repeatedly.

7. The method according to claim 1, wherein
the first uplink transmission comprises a dynamically scheduled uplink channel or signal; and
transmitting the first uplink transmission on the first target time-domain resource comprises:
transmitting the first uplink transmission on the first time-domain resource;
wherein the first target time-domain resource comprises the first time-domain resource; the dynamically scheduled uplink channel or signal comprises one or more of: a physical uplink shared channel (PUSCH) scheduled by downlink control information (DCI), a sounding reference signal (SRS) triggered by DCI, and a physical uplink control channel (PUCCH) carrying hybrid automatic repeat-request acknowledgement (HARQ-ACK) information.

8. The method according to claim 1, wherein
the first uplink transmission comprises a preconfigured physical uplink shared channel (PUSCH) and a physical uplink control channel (PUCCH) carrying hybrid automatic repeat-request acknowledgement (HARQ-ACK) information, which are overlapped in a time domain; and
transmitting the first uplink transmission on the first target time-domain resource comprises one of:
transmitting the PUCCH carrying HARQ-ACK information;
transmitting the preconfigured PUSCH carrying the HARQ-ACK information;
transmitting the PUCCH carrying HARQ-ACK information in a case where it is determined, based on the first configuration information, that HARQ-ACK information and a preconfigured PUSCH are not multiplexed;
transmitting the preconfigured PUSCH carrying the HARQ-ACK information in a case where it is determined, based on the first configuration information, that HARQ-ACK information and a preconfigured PUSCH are multiplexed;
transmitting the PUCCH carrying HARQ-ACK information in a case where the non-active period of the cell DRX is determined via a downlink control information (DCI) format or in a case where it is determined, based on second configuration information, to activate or deactivate the cell DRX using a DCI format;
transmitting the preconfigured PUSCH in a case where the non-active period of the cell DRX is determined via a DCI format or in a case where it is determined, based on second configuration information, to activate or deactivate the cell DRX using a DCI format, wherein the preconfigured PUSCH carries the HARQ-ACK information;
transmitting the PUCCH carrying HARQ-ACK information in a case where the non-active period of the cell DRX is determined via radio resource control (RRC) signaling or in a case where it is determined, based on third configuration information, to activate or deactivate the cell DRS using RRC signaling; or
transmitting the preconfigured PUSCH in a case where the non-active period of the cell DRX is determined via RRC signaling or in a case where it is determined, based on third configuration information, to activate or deactivate the cell DRX using RRC signaling, wherein the preconfigured PUSCH carries the HARQ-ACK information.

9. The method according to claim 8, wherein in a case where the preconfigured PUSCH and the PUCCH carrying HARQ-ACK information are overlapped on a third time-domain resource, transmitting the PUCCH carrying HARQ-ACK information comprises:
transmitting the PUCCH carrying HARQ-ACK information on the third time-domain resource in a case where the third time-domain resource is partially or fully overlapped with the second time-domain resource; or
transmitting the PUCCH carrying HARQ-ACK information on the third time-domain resource in a case where the third time-domain resource and the second time-domain resource are completely non-overlapped;
wherein the first target time-domain resource comprises the third time-domain resource.

10. The method according to claim 9, further comprising:
refraining from transmitting the preconfigured PUSCH on the third time-domain resource; or
refraining from transmitting the preconfigured PUSCH on the second time-domain resource; or
refraining from transmitting the preconfigured PUSCH on the first time-domain resource.

11. The method according to claim 8, wherein in a case where the preconfigured PUSCH and the PUCCH carrying HARQ-ACK information are overlapped on a third time-domain resource, transmitting the preconfigured PUSCH carrying the HARQ-ACK information comprises:
transmitting the preconfigured PUSCH carrying the HARQ-ACK information on the third time-domain resource in a case where the third time-domain resource is partially or fully overlapped with the second time-domain resource; or
transmitting the preconfigured PUSCH carrying the HARQ-ACK information on the third time-domain resource in a case where the third time-domain resource and the second time-domain resource are completely non-overlapped;
wherein the first target time-domain resource comprises the third time-domain resource.

12. The method according to claim 11, further comprising:
refraining from transmitting the preconfigured PUSCH on a time-domain resource in the second time-domain resource except for the third time-domain resource; or
refraining from transmitting the preconfigured PUSCH on the second time-domain resource in a case where the third time-domain resource and the second time-domain resource are completely non-overlapped.

13. The method according to any one of claims 1 to 12, wherein transmitting the first uplink transmission on the first target time-domain resource comprises:
transmitting the first uplink transmission on the first target time-domain resource in a case where a first condition is met; and/or,
refraining from transmitting the first uplink transmission on the first target time-domain resource in a case where the first condition is not met.

14. The method according to claim 13, wherein the first condition comprises a condition related to a first processing time length.

15. The method according to claim 14, wherein the first condition comprises that:
a duration of an interval between a first time-domain position and a start position of the first target time-domain resource is greater than or equal to the first processing time length; or
a duration of an interval between a first time-domain position and a start position of the first time-domain resource is greater than or equal to the first processing time length;
wherein the first time-domain position comprises one of the following situations:
the terminal device receives a last symbol of a physical downlink control channel (PDCCH) reception carrying a first downlink control information (DCI) format;
the terminal device receives an end position of a slot where a last symbol of a PDCCH reception carrying a first DCI format is located;
the terminal device is configured to receive a last symbol of a PDCCH reception used for transmitting a first DCI format;
the terminal device is configured to receive an end position of a slot where a last symbol of a PDCCH reception used for transmitting a first DCI format is located;
effective time for activating cell DRX is determined based on a first DCI format;
effective time for deactivating cell DRX is determined based on a first DCI format; or
effective time of a first DCI format;
wherein the first DCI format is used to indicate activation or deactivation of cell DRX, and/or the first DCI format is used to indicate that a cell enters a network energy-saving mode.

16. The method according to any one of claims 1 to 15, wherein refraining from transmitting the first uplink transmission on the second target time-domain resource comprises:
refraining from transmitting the first uplink transmission on the second target time-domain resource in a case where a second condition is met; and/or
transmitting the first uplink transmission on the second target time-domain resource in a case where a second condition is not met.

17. The method according to claim 16, wherein the second condition comprises a condition related to a second processing time length.

18. The method according to claim 17, wherein the second condition comprises that:
a duration of an interval between a second time-domain position and a start position of the second target time-domain resource is greater than or equal to the second processing time length; or
a duration of an interval between a second time-domain position and a start position of the first time-domain resource is greater than or equal to the second processing time length;
wherein the second time-domain position comprises one of the following situations:
the terminal device receives a last symbol of a physical downlink control channel (PDCCH) reception carrying a first downlink control information (DCI) format;
the terminal device receives an end position of a slot where a last symbol of a PDCCH reception carrying a first DCI format is located;
the terminal device is configured to receive a last symbol of a PDCCH reception used for transmitting a first DCI format;
the terminal device is configured to receive an end position of a slot where a last symbol of a PDCCH reception used for transmitting a first DCI format is located;
effective time for activating cell DRX is determined based on a first DCI format;
effective time for deactivating cell DRX is determined based on a first DCI format; or
effective time of a first DCI format;
wherein the first DCI format is used to indicate activation or deactivation of cell DRX, and/or the first DCI format is used to indicate that a cell enters a network energy-saving mode.

19. The method according to any one of claims 13 to 18, wherein the non-active period of the cell DRX is determined via a first DCI format.

20. The method according to any one of claims 1 to 19, wherein
a start position of the first time-domain resource is within an active period of the cell DRX, and an end position of the first time-domain resource is the same as an end position of the second time-domain resource; or
a start position of the first time-domain resource is within an active period of the cell DRX, and an end position of the first time-domain resource is within the active period of the cell DRX; or
a start position of the first time-domain resource is the same as a start position of the second time-domain resource, and an end position of the first time-domain resource is the same as an end position of the second time-domain resource; or
a start position of the first time-domain resource is the same as a start position of the second time-domain resource, and an end position of the first time-domain resource is within an active period of the cell DRX.

21. A method for wireless communication, performed by a network device, wherein a first uplink transmission of a terminal device occupies a first time-domain resource, and a second time-domain resource is an overlapping part between the first time-domain resource and a time-domain resource of a non-active period of cell discontinuous reception (DRX) configured by the network device, wherein the first time-domain resource comprises a first target time-domain resource and/or a second target time-domain resource;
the method comprising:
receiving the first uplink transmission on the first target time-domain resource; and/or
refraining from receiving the first uplink transmission on the second target time-domain resource.

22. The method according to claim 21, wherein
the first uplink transmission comprises a preconfigured uplink channel or signal; and
refraining from receiving the first uplink transmission on the second target time-domain resource comprises:
refraining from receiving the first uplink transmission on the second time-domain resource, wherein the second target time-domain resource comprises the second time-domain resource.

23. The method according to claim 22, further comprising:
refraining from receiving the first uplink transmission on the first time-domain resource, wherein the second target time-domain resource comprises the first time-domain resource; or
receiving the first uplink transmission on a time-domain resource other than the second time-domain resource within the first time-domain resource, wherein the first target time-domain resource comprises the time-domain resource other than the second time-domain resource within the first time-domain resource; or
receiving the first uplink transmission on the a time-domain resource that precedes the second time-domain resource in the first time-domain resource, and not receiving the first uplink transmission on a time-domain resource that follows the second time-domain resource in the first time-domain resource, wherein the first target time-domain resource comprises the time-domain resource that precedes the second time-domain resource in the first time-domain resource, and the second target time-domain resource comprises the time-domain resource that follows the second time-domain resource in the first time-domain resource; or
refraining from receiving the first uplink transmission on a time-domain resource that precedes the second time-domain resource in the first time-domain resource, and receiving the first uplink transmission on a time-domain resource that follows the second time-domain resource in the first time-domain resource, wherein the first target time-domain resource comprises the time-domain resource that follows the second time-domain resource in the first time-domain resource, and the second target time-domain resource comprises time-domain resource that precedes the second time-domain resource in the first time-domain resource.

24. The method according to claim 21, wherein
the first uplink transmission comprises a preconfigured uplink channel or signal; and
receiving the first uplink transmission on the first target time-domain resource comprises:
receiving the first uplink transmission on the first time-domain resource in a case where the second time-domain resource is absent, wherein the first target time-domain resource comprises the first time-domain resource.

25. The method according to any one of claims 22 to 24, wherein the preconfigured uplink channel or signal comprises one or more of: a configured grant physical uplink shared channel (CG-PUSCH), a sounding reference signal (SRS) configured by radio resource control (RRC), an SRS activated by a medium access control (MAC) control element (CE), a scheduling request (SR), a physical uplink control channel (PUCCH) not carrying hybrid automatic repeat-request acknowledgement (HARQ-ACK) information, and a physical uplink shared channel (PUSCH) carrying semi-persistent channel state information (SP-CSI).

26. The method according to any one of claims 22 to 25, wherein
the first uplink transmission comprises one or more preconfigured uplink channels or signals; and
in a case where the first uplink transmission comprises a plurality of preconfigured uplink channels or signals, the plurality of preconfigured uplink channels or signals are transmitted repeatedly or not transmitted repeatedly.

27. The method according to claim 21, wherein
the first uplink transmission comprises a dynamically scheduled uplink channel or signal; and
receiving the first uplink transmission on the first target time-domain resource comprises:
receiving the first uplink transmission on the first time-domain resource;
wherein the first target time-domain resource comprises the first time-domain resource; the dynamically scheduled uplink channel or signal comprises one or more of: a physical uplink shared channel (PUSCH) scheduled by downlink control information (DCI), a sounding reference signal (SRS) triggered by DCI, and a physical uplink control channel (PUCCH) carrying hybrid automatic repeat-request acknowledgement (HARQ-ACK) information.

28. The method according to claim 21, wherein
the first uplink transmission comprises a preconfigured physical uplink shared channel (PUSCH) and a physical uplink control channel (PUCCH) carrying hybrid automatic repeat-request acknowledgement (HARQ-ACK) information, which are overlapped in a time domain; and
receiving the first uplink transmission on the first target time-domain resource comprises one of:
receiving the PUCCH carrying HARQ-ACK information; or
receiving the preconfigured PUSCH carrying the HARQ-ACK information.

29. The method according to claim 28, wherein
the PUCCH carrying HARQ-ACK information is transmitted in a case where it is determined, based on the first configuration information, that HARQ-ACK information and a preconfigured PUSCH are not multiplexed; or
the preconfigured PUSCH carrying the HARQ-ACK information is transmitted in a case where it is determined, based on the first configuration information, that HARQ-ACK information and a preconfigured PUSCH are multiplexed; or
the PUCCH carrying HARQ-ACK information is transmitted in a case where the non-active period of the cell DRX is determined via a DCI format or in a case where it is determined, based on second configuration information, to activate or deactivate the cell DRX using a DCI format; or
the preconfigured PUSCH is transmitted in a case where the non-active period of the cell DRX is determined via a DCI format or in a case where it is determined, based on second configuration information, to activate or deactivate the cell DRX using a DCI format, wherein the preconfigured PUSCH carries the HARQ-ACK information; or
the PUCCH carrying HARQ-ACK information is transmitted in a case where the non-active period of the cell DRX is determined via radio resource control (RRC) signaling or in a case where it is determined, based on third configuration information, to activate or deactivate the cell DRX using RRC signaling; or
the preconfigured PUSCH is transmitted in a case where the non-active period of the cell DRX is determined via RRC signaling or in a case where it is determined, based on third configuration information, to activate or deactivate the cell DRX using RRC signaling, wherein the preconfigured PUSCH carries the HARQ-ACK information.

30. The method according to claim 28 or 29, wherein in a case where the preconfigured PUSCH and the PUCCH carrying HARQ-ACK information are overlapped on a third time-domain resource, receiving the PUCCH carrying the HARQ-ACK information comprises:
receiving the PUCCH carrying HARQ-ACK information on the third time-domain resource in a case where the third time-domain resource is partially or fully overlapped with the second time-domain resource; or
receiving the PUCCH carrying HARQ-ACK information on the third time-domain resource in a case where the third time-domain resource and the second time-domain resource are completely non-overlapped;
wherein the first target time-domain resource comprises the third time-domain resource.

31. The method according to claim 30, further comprising:
refraining from receiving the preconfigured PUSCH on the third time-domain resource; or
refraining from receiving the preconfigured PUSCH on the second time-domain resource; or
refraining from receiving the preconfigured PUSCH on the first time-domain resource.

32. The method according to claim 28 or 29, wherein in a case where the preconfigured PUSCH and the PUCCH carrying HARQ-ACK information are overlapped on a third time-domain resource, receiving the preconfigured PUSCH carrying the HQRQ-ACK information comprises:
receiving the preconfigured PUSCH carrying the HARQ-ACK information on the third time-domain resource in a case where the third time-domain resource is partially or fully overlapped with the second time-domain resource; or
receiving the preconfigured PUSCH carrying the HARQ-ACK information on the third time-domain resource in a case where the third time-domain resource and the second time-domain resource are completely non-overlapped;
wherein the first target time-domain resource comprises the third time-domain resource.

33. The method according to claim 32, further comprising:
refraining from receiving the preconfigured PUSCH on a time-domain resource in the second time-domain resource other than the third time-domain resource; or
refraining from receiving the preconfigured PUSCH on the second time-domain resource in a case where the third time-domain resource and the second time-domain resource are completely non-overlapped.

34. The method according to any one of claims 21 to 33, wherein receiving the first uplink transmission on the first target time-domain resource comprises:
receiving the first uplink transmission on the first target time-domain resource in a case where a first condition is met; and/or
refraining from receiving the first uplink transmission on the first target time-domain resource in a case where the first condition is not met.

35. The method according to claim 34, wherein the first condition comprises a condition related to a first processing time length.

36. The method according to claim 35, wherein the first condition comprises that:
a duration of an interval between a first time-domain position and a start position of the first target time-domain resource is greater than or equal to the first processing time length; or
a duration of an interval between a first time-domain position and a start position of the first time-domain resource is greater than or equal to the first processing time length;
wherein the first time-domain position comprises one of the following situations:
the terminal device receives a last symbol of a physical downlink control channel (PDCCH) reception carrying a first downlink control information (DCI) format;
the terminal device receives an end position of a slot where a last symbol of a PDCCH reception carrying a first DCI format is located;
the terminal device is configured to receive a last symbol of a PDCCH reception used for transmitting a first DCI format;
the terminal device is configured to receive an end position of a slot where a last symbol of a PDCCH reception used for transmitting a first DCI format is located;
effective time for activating cell DRX is determined based on a first DCI format;
effective time for deactivating cell DRX is determined based on a first DCI format; or
effective time of a first DCI format;
wherein the first DCI format is used to indicate activation or deactivation of cell DRX, and/or the first DCI format is used to indicate that a cell enters a network energy-saving mode.

37. The method according to any one of claims 21 to 36, wherein refraining from receiving the first uplink transmission on the second target time-domain resource comprises:
refraining from receiving the first uplink transmission on the second target time-domain resource in a case where a second condition is met; and/or
receiving the first uplink transmission on the second target time-domain resource in a case where a second condition is not met.

38. The method according to claim 37, wherein the second condition comprises a condition related to a second processing time length.

39. The method according to claim 38, wherein the second condition comprises that:
a duration of an interval between a second time-domain position and a start position of the second target time-domain resource is greater than or equal to the second processing time length; or
a duration of an interval between a second time-domain position and a start position of the first time-domain resource is greater than or equal to the second processing time length;
wherein the second time-domain position comprises one of the following situations:
the terminal device receives a last symbol of a physical downlink control channel (PDCCH) reception carrying a first downlink control information (DCI) format;
the terminal device receives an end position of a slot where a last symbol of a PDCCH reception carrying a first DCI format is located;
the terminal device is configured to receive a last symbol of a PDCCH reception used for transmitting a first DCI format;
the terminal device is configured to receive an end position of a slot where a last symbol of a PDCCH reception used for transmitting a first DCI format is located;
effective time for activating cell DRX is determined based on a first DCI format;
effective time for deactivating cell DRX is determined based on a first DCI format; or
effective time of a first DCI format;
wherein the first DCI format is used to indicate activation or deactivation of cell DRX, and/or the first DCI format is used to indicate that a cell enters a network energy-saving mode.

40. The method according to any one of claims 34 to 39, wherein the non-active period of the cell DRX is determined via a first DCI format.

41. The method according to any one of claims 21 to 40, wherein
a start position of the first time-domain resource is within an active period of the cell DRX, and an end position of the first time-domain resource is the same as an end position of the second time-domain resource; or
a start position of the first time-domain resource is within an active period of the cell DRX, and an end position of the first time-domain resource is within the active period of the cell DRX; or
a start position of the first time-domain resource is the same as a start position of the second time-domain resource, and an end position of the first time-domain resource is the same as an end position of the second time-domain resource; or
a start position of the first time-domain resource is the same as a start position of the second time-domain resource, and an end position of the first time-domain resource is within an active period of the cell DRX.

42. A terminal device, wherein a first uplink transmission of the terminal device occupies a first time-domain resource, and a second time-domain resource is an overlapping part between the first time-domain resource and a time-domain resource of a non-active period of cell discontinuous reception (DRX), wherein the first time-domain resource comprises a first target time-domain resource and/or a second target time-domain resource, and the terminal device comprises:
a transmitting module, configured to transmit the first uplink transmission on the first target time-domain resource, and/or refrain from transmitting the first uplink transmission on the second target time-domain resource.

43. A network device, wherein a first uplink transmission of a terminal device occupies a first time-domain resource, and a second time-domain resource is an overlapping part between the first time-domain resource and a time-domain resource of a non-active period of cell discontinuous reception (DRX) configured by the network device, wherein the first time-domain resource comprises a first target time-domain resource and/or a second target time-domain resource, and the network device comprises:
a receiving module, configured to receive the first uplink transmission on the first target time-domain resource, and/or refrain from receiving the first uplink transmission on the second target time-domain resource.

44. A communication device, comprising: a processor and a memory, wherein the memory stores a computer program, which when executed by the processor, causes the processor to perform the method as defined in any one of claims 1 to 20, or the method as defined in any one of claims 21 to 41.

45. A computer-readable storage medium, storing a computer program, which when executed by a processor, causes the processor to perform the method as defined in any one of claims 1 to 20, or the method as defined in any one of claims 21 to 41.

46. A chip, comprising: a programmable logic circuit and/or program instructions, which, when the chip runs, are used to perform the method as defined in any one of claims 1 to 20, or the method as defined in any one of claims 21 to 41.

47. A computer program product, comprising: computer instructions stored in a computer-readable storage medium, wherein a processor reads and executes the computer instructions from the computer-readable storage medium to perform the method as defined in any one of claims 1 to 20, or the method as defined in any one of claims 21 to 41.
